# EUROPEAN PATENT APPLICATION

(11) **EP 4 548 735 A1**
(43) Date of publication of application: **07.05.2025**
(21) Application number: 23830914.0
(22) Date of filing: 25.05.2023
(51) Int. Cl.: A01B 69/00, G05D 1/20

(54) **TRAVEL CONTROL SYSTEM, TRAVEL CONTROL METHOD, AND COMPUTER PROGRAM**

(30) Priority: 28.06.2022 JP 2022103755
(71) Applicant: Kubota Corporation, Osaka 556-8601 (JP)
(72) Inventor: MURATA, Yusuke, Sakai-shi, Osaka 590-0908 (JP)
(74) Representative: Cabinet Beau de Loménie
(86) International application number: PCT/JP2023/019522
(87) International publication number: WO 2024/004463

(57) **Abstract**

A travel control system according to an embodiment controls self-driving of an agricultural machine. The travel control system includes a sensor provided in the agricultural machine, the sensor being capable of sensing an environment around the agricultural machine to output sensor data; and a controller capable of controlling travel of the agricultural machine. When the agricultural machine turns left or right to enter a passageway, the controller controls the agricultural machine so as to travel along a target path such that both sides of the passageway with respect to a transverse direction are sensed.

## Description

### TECHNICAL FIELD

The present disclosure relates to travel control systems, travel control methods, and computer programs.

### BACKGROUND ART

Research and development is underway to study smart agriculture with the effective use of ICT (Information and Communication Technology) and IoT (Internet of Things) as the next generation of agriculture. Research and development is also underway to study automated and unmanned work vehicles, such as tractors, for use in agricultural fields. For example, work vehicles capable of traveling in an automatic steering mode with the use of a positioning system such as GNSS (Global Navigation Satellite System), which is capable of precise positioning, have been put into practical use.

In addition, research and development is also underway to study the technique of conducting a search of a region around a work vehicle with the use of obstacle sensors to detect obstacles around the work vehicle. For example, Patent Document No. 1 discloses the technique of detecting obstacles around a self-drivable tractor with the use of LiDAR (Light Detection and Ranging) sensors.

### CITATION LIST

### PATENT LITERATURE

Patent Document No. 1: Japanese Laid-Open Patent Publication No. 2019-175059

### SUMMARY OF INVENTION

### TECHNICAL PROBLEM

An agricultural machine traveling in a self-driving mode sometimes travels through a passageway extending between a site, such as field, and a road. When traveling through such a passageway, the agricultural machine is required to check the condition of the passageway.

### SOLUTION TO PROBLEM

A travel control system according to an embodiment of the present disclosure is a travel control system for controlling self-driving of an agricultural machine, including: a sensor provided in the agricultural machine, the sensor being capable of sensing an environment around the agricultural machine to output sensor data; and a controller capable of controlling travel of the agricultural machine, wherein when the agricultural machine turns left or right to enter a passageway, the controller controls the agricultural machine so as to travel along a target path such that both sides of the passageway with respect to a transverse direction are sensed.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium or a nonvolatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to an embodiment of the present disclosure, part of a passageway which cannot be sensed in a direction from one of the right and left sides of the passageway and surroundings of that part are sensed, whereby the passageway and its surrounding environment can be checked in detail.

### BRIEF DESCRIPTION OF DRAWINGS

FIG. **1** is a diagram providing an overview of an agriculture management system according to an illustrative embodiment of the present disclosure.
FIG. **2** is a side view schematically showing an example of work vehicle and an example of implement that is linked to the work vehicle.
FIG. **3** is a block diagram showing an example configuration of the work vehicle and the implement.
FIG. **4** is a conceptual diagram showing an example of the work vehicle performing positioning based on an RTK-GNSS.
FIG. **5** is a diagram showing an example of operational terminal and an example of operation switches disposed in a cabin.
FIG. **6** is a block diagram showing an example of hardware configuration of a management device and a terminal device.
FIG. **7** is a diagram schematically showing an example of the work vehicle automatically traveling along a target path inside a field.
FIG. **8** is a flowchart showing an example operation of steering control during self-driving.
FIG. **9A** is a diagram showing an example of the work vehicle traveling along a target path **P.**
FIG. **9B** is a diagram showing an example of the work vehicle at a position which is shifted rightward from the target path **P.**
FIG. **9C** is a diagram showing an example of the work vehicle at a position which is shifted leftward from the target path **P.**
FIG. **9D** is a diagram showing an example of the work vehicle oriented in an inclined direction with respect to the target path **P.**
FIG. **10** is a diagram schematically showing an example of state where a plurality of the work vehicles perform self-traveling inside a field and on a road outside the field.
FIG. **11** is a diagram showing an example of a search region of a work vehicle.
FIG. **12** is a diagram showing a road, a site, and a passageway.
FIG. **13** is a diagram illustrating the passageway.
FIG. **14** is a diagram showing a target path for entry from the road into a field via the passageway.
FIG. **15** is a diagram showing a work vehicle that makes a left turn after having passed through an area in front of the passageway along a target path.
FIG. **16** is a diagram showing a work vehicle that makes a turn to enter the passageway after having passed through the area in front of the passageway.
FIG. **17** is a diagram showing another example of the target path.
FIG. **18** is a diagram illustrating a work vehicle that makes a U-turn after having passed through the area in front of the passageway.
FIG. **19** is a diagram showing still another example of the target path.
FIG. **20** is a diagram illustrating a work vehicle that reverses after having passed through the area in front of the passageway.
FIG. **21** is a diagram illustrating a work vehicle that reverses after having passed through the area in front of the passageway.
FIG. **22** is a diagram showing a target path for entry from the field into the road via the passageway.
FIG. **23** is a diagram showing a work vehicle that makes a right turn after having passed through the area in front of the passageway along a target path.

### DESCRIPTION OF EMBODIMENTS

### (Definition of terms)

In the present disclosure, an "agricultural machine" refers to a machine for agricultural applications. The agricultural machine of the present disclosure can be a mobile agricultural machine that is capable of performing agricultural work while traveling. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work (e.g., the operation of the implement) may be controlled automatically. In the case where the agricultural machine is a vehicle-type machine, travel of the agricultural machine via self-driving will be referred to as "self-traveling". The controller may control at least one of: steering that is required in the movement of the agricultural machine, adjustment of the moving speed, or beginning and ending of a move. In the case of controlling a work vehicle having an implement attached thereto, the controller may be configured or programmed to control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also move partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion of, or the entirety of, the controller may reside outside the agricultural machine. Control signals, commands, data, etc. may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

A "work plan" is data defining a plan of one or more tasks of agricultural work to be performed by an agricultural machine. The work plan may include, for example, information representing the order of the tasks of agricultural work to be performed by an agricultural machine or the field where each of the tasks of agricultural work is to be performed. The work plan may include information representing the time and the date when each of the tasks of agricultural work is to be performed. The work plan may be created by a processing unit communicating with the agricultural machine to manage the agricultural machine or a processing unit mounted on the agricultural machine. The processing unit can create a work plan based on, for example, information input by the user (agricultural business executive, agricultural worker, etc.) manipulating a terminal device. In this specification, the processing unit communicating with the agricultural machine to manage the agricultural machine will be referred to as a "management device". The management device may manage agricultural work of a plurality agricultural machines. In this case, the management device may create a work plan including information on each task of agricultural work to be performed by each of the plurality of agricultural machines. The work plan may be downloaded to each of the agricultural machines and stored in a storage device in each of the agricultural machines. In order to perform the scheduled agricultural work in accordance with the work plan, each agricultural machine can automatically move to a field and perform the agricultural work.

An "environment map" is data representing, with a predetermined coordinate system, the position or the region of an object existing in the environment where the agricultural machine moves. The environment map may be referred to simply as a "map" or "map data". The coordinate system defining the environment map is, for example, a world coordinate system such as a geographic coordinate system fixed to the globe. Regarding the object existing in the environment, the environment map may include information other than the position (e.g., attribute information or other types of information). The "environment map" encompasses various type of maps such as a point cloud map and a lattice map. Data on a local map or a partial map that is generated or processed in a process of constructing the environment map is also referred to as a "map" or "map data".

An "agricultural road" is a road used mainly for agriculture. An "agricultural road" is not limited to a road paved with asphalt, and encompasses unpaved roads covered with soil, gravel or the like. An "agricultural road" encompasses roads (including private roads) on which only vehicle-type agricultural machines (e.g., work vehicles such as tractors, etc.) are allowed to travel and roads on which general vehicles (automobiles, trucks, buses, etc.) are also allowed to travel. The work vehicles may automatically travel on a general road in addition to an agricultural road. The "general road" is a road maintained for traffic of general vehicles.

### (Embodiments)

Hereinafter, embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of the claims. In the following description, elements having identical or similar functions are denoted by identical reference numerals.

The following embodiments are only exemplary, and the techniques according to the present disclosure are not limited to the following embodiments. For example, numerical values, shapes, materials, steps, orders of steps, layout of a display screen, etc. which are indicated in the following embodiments are only exemplary, and admit of various modifications so long as it makes technological sense. Any one implementation may be combined with another so long as it makes technological sense to do so.

Hereinafter, embodiments in which techniques according to the present disclosure are applied to a work vehicle, such as a tractor, which is an example of agricultural machine, will be mainly described. The techniques according to the present disclosure are also applicable to other types of agricultural machines in addition to the work vehicle such as a tractor.

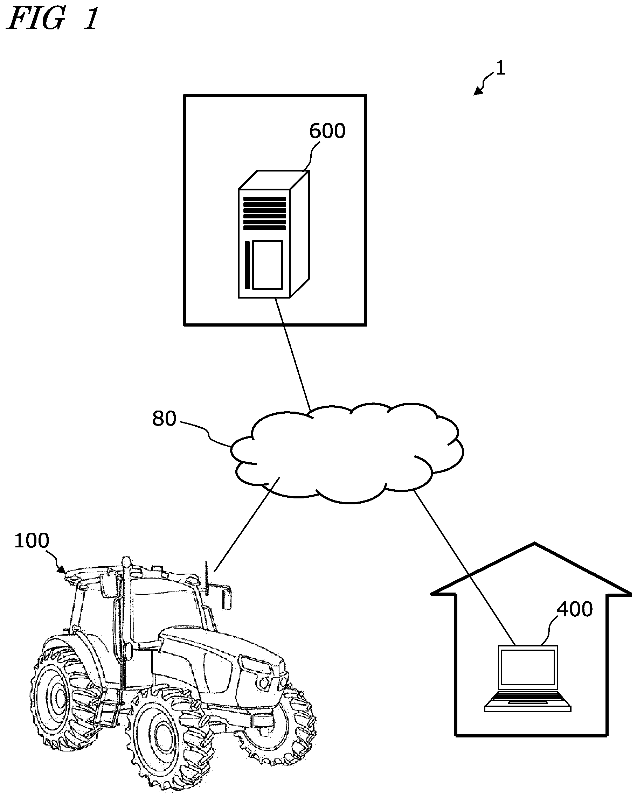

FIG. **1** is a diagram providing an overview of an agriculture management system **1** according to an illustrative embodiment of the present disclosure. The agriculture management system **1** shown in FIG. **1** includes a work vehicle **100,** a terminal device **400,** and a management device **600.** The terminal device **400** is a computer used by a user performing remote monitoring of the work vehicle **100.** The management device **600** is a computer managed by a business operator running the agriculture management system **1.** The work vehicle **100,** the terminal device **400** and the management device **600** can communicate with each other via the network **80.** FIG. **1** shows one work vehicle **100,** but the agriculture management system **1** may include a plurality of the work vehicles or any other agricultural machine.

The work vehicle **100** according to the present embodiment is a tractor. The work vehicle **100** can have an implement attached to its rear and/or its front. While performing agricultural work in accordance with the type of the implement, the work vehicle **100** is able to travel inside a field. The work vehicle **100** may travel inside the field or outside the field with no implement being attached thereto.

The work vehicle **100** has a self-driving function. In other words, the work vehicle **100** can travel by the action of a controller, rather than manually. The controller according to the present embodiment is provided inside the work vehicle **100,** and is able to control both the speed and steering of the work vehicle **100.** The work vehicle **100** can perform self-traveling outside the field (e.g., on roads) as well as inside the field.

The work vehicle **100** includes a device usable for positioning or localization, such as a GNSS receiver or an LiDAR sensor. Based on the position of the work vehicle **100** and information on a target path, the controller of the work vehicle **100** causes the work vehicle **100** to automatically travel. In addition to controlling the travel of the work vehicle **100,** the controller also controls the operation of the implement. As a result, while automatically traveling inside the field, the work vehicle **100** is able to perform agricultural work by using the implement. In addition, the work vehicle **100** is able to automatically travel along the target path on a road outside the field (e.g., an agricultural road or a general road). The work vehicle **100** travels in a self-traveling mode along roads outside the field with the effective use of data output from sensing devices, such as the cameras **120,** the obstacle sensors **130** and the LiDAR sensor **140.**

The management device **600** is a computer to manage the agricultural work performed by the work vehicle **100.** The management device **600** may be, for example, a server computer that performs centralized management on information regarding the field on the cloud and supports agriculture by use of the data on the cloud. The management device **600,** for example, creates a work plan for the work vehicle **100** and causes the work vehicle **100** to execute agricultural work in accordance with the work plan. The management device **600** generates a target path in the field based on, for example, the information entered by a user using the terminal unit **400** or any other device. The management device **600** may generate and edit an environment map based on data collected by the work vehicle **100** or any other movable body by use of the sensing device such as a LiDAR sensor. The management device **600** transmits data on the work plan, the target path and the environment map thus generated to the work vehicle **100.** The work vehicle **100** automatically moves and performs agricultural work based on the data.

The terminal device **400** is a computer that is used by a user who is at a remote place from the work vehicle **100.** The terminal device **400** shown in FIG. **1** is a laptop computer, but the terminal device **400** is not limited to this. The terminal device **400** may be a stationary computer such as a desktop PC (personal computer), or a mobile terminal such as a smartphone or a tablet computer. The terminal device **400** may be used to perform remote monitoring of the work vehicle **100** or remote-manipulate the work vehicle **100.** For example, the terminal device **400** can display, on a display screen thereof, a video captured by one or more cameras (imagers) included in the work vehicle **100.** The terminal device **400** can also display, on the display screen thereof, a setting screen allowing the user to input information necessary to create a work plan (e.g., a schedule of each task of agricultural work) for the work vehicle **100.** When the user inputs necessary information to the setting screen and performs a manipulation to transmit the information, the terminal device **400** transmits the input information to the management device **600.** The management device **600** creates a work plan based on the information. The terminal device **400** may further have a function of displaying, on a display screen thereof, a setting screen allowing the user to input information necessary to set a target path.

Hereinafter, a configuration and an operation of the system according to the present embodiment will be described in more detail.

### [1. Configuration]

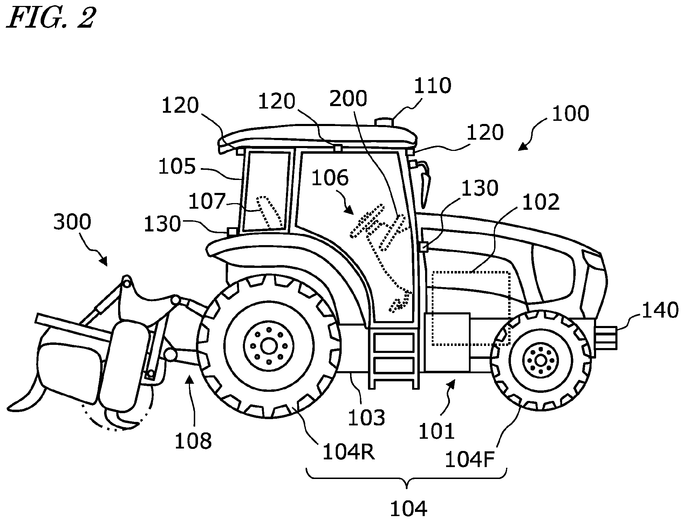

FIG. **2** is a side view schematically showing an example of the work vehicle **100** and an example of implement **300** linked to the work vehicle **100.** The work vehicle **100** according to the present embodiment can operate both in a manual driving mode and a self-driving mode. In the self-driving mode, the work vehicle **100** is able to perform unmanned travel. The work vehicle **100** can perform self-driving both inside a field and outside the field.

As shown in FIG. **2****,** the work vehicle **100** includes a vehicle body **101,** a prime mover (engine) **102,** and a transmission **103.** On the vehicle body **101,** wheels **104** with tires and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In the case where the work vehicle **100** performs tasked travel inside the field, either or both of the front wheels **104F** and the rear wheels **104R** may be a plurality of wheels (crawlers) with a continuous track rather than wheels with tires.

The work vehicle **100** can include at least one sensing device to sense the environment around the work vehicle **100** and a processing unit to process sensor data output from the at least one sensing device. In the example shown in FIG. **2****,** the work vehicle **100** includes a plurality of sensing devices. The sensing devices include a plurality of cameras **120,** a LiDAR sensor **140,** and a plurality of obstacle sensors **130.**

The cameras **120** may be provided at the front/rear/right/left of the work vehicle **100,** for example. The cameras **120** image the environment around the work vehicle **100** and generate image data. The images acquired by the cameras **120** can be output to a processing unit included in the work vehicle **100** and transmitted to the terminal device **400,** which is responsible for remote monitoring. Also, the images may be used to monitor the work vehicle **100** during unmanned driving. The cameras **120** may also be used to generate images to allow the work vehicle **100,** traveling on a road outside the field (an agricultural road or a general road), to recognize objects, obstacles, white lines, road signs, traffic signs or the like in the surroundings of the work vehicle **100.**

The LiDAR sensor **140** in the example shown in FIG. **2** is disposed on a bottom portion of a front surface of the vehicle body **101.** The LiDAR sensor **140** may be disposed at any other position. For example, the LiDAR sensor **140** may be provided at the upper portion of the cabin **105.** The LiDAR sensor **140** can be a 3D-LiDAR sensor but may be a 2D-LiDAR sensor. The LiDAR sensor **140** senses the environment around the work vehicle **100** to output sensor data. While the work vehicle **100** is traveling mainly outside the field, the LiDAR sensor **140** repeatedly outputs sensor data representing the distance and the direction between an object existing in the environment around the work vehicle **100** and each of measurement points, or three-dimensional or two-dimensional coordinate values of each of the measurement points. The sensor data output from the LiDAR sensor **140** is processed by the controller of the work vehicle **100.** The controller can perform localization of the work vehicle **100** by matching the sensor data against the environment map. The controller can further detect an object such as an obstacle existing in the surroundings of the work vehicle **100** based on the sensor data. The controller can utilize an algorithm such as, for example, SLAM (Simultaneous Localization and Mapping) to generate or edit an environment map. The work vehicle **100** may include a plurality of LiDAR sensors disposed at different positions with different orientations.

The plurality of obstacle sensors **130** shown in FIG. **2** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may include, for example, a laser scanner or an ultrasonic sonar. The obstacle sensors **130** may be used to detect obstacles around the work vehicle **100** during self-traveling to cause the work vehicle **100** to halt or detour around the obstacles. The LiDAR sensor **140** may be used as one of the obstacle sensors **130.**

The work vehicle **100** further includes a GNSS unit **110.** The GNSS unit **110** includes a GNSS receiver. The GNSS receiver may include an antenna to receive a signal(s) from a GNSS satellite(s) and a processor to calculate the position of the work vehicle **100** based on the signal(s) received by the antenna. The GNSS unit **110** receives satellite signals transmitted from the plurality of GNSS satellites, and performs positioning based on the satellite signals. GNSS is the general term for satellite positioning systems such as GPS (Global Positioning System), QZSS (Quasi-Zenith Satellite System; e.g., MICHIBIKI), GLONASS, Galileo, and BeiDou. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensor data acquired by the sensing devices such as the cameras **120** and/or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road or an orchard, the position and the orientation of the work vehicle **100** can be estimated with a high accuracy based on data that is acquired by the cameras **120** and/or the LiDAR sensor **140** and on an environment map that is previously stored in the storage device. By correcting or complementing position data based on the satellite signals using the data acquired by the cameras **120** and/or the LiDAR sensor **140,** it becomes possible to identify the position of the work vehicle **100** with a higher accuracy.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the steered wheels, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement **300** can be connected with the front portion of the work vehicle **100.**

Although the implement **300** shown in FIG. **2** is a rotary tiller, the implement **300** is not limited to a rotary tiller. For example, any arbitrary implement such as a seeder, a spreader, a transplanter, a mower, a rake implement, a baler, a harvester, a sprayer, or a harrow, can be connected to the work vehicle **100** for use.

The work vehicle **100** shown in FIG. **2** can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous driving, or by remote operation by a user.

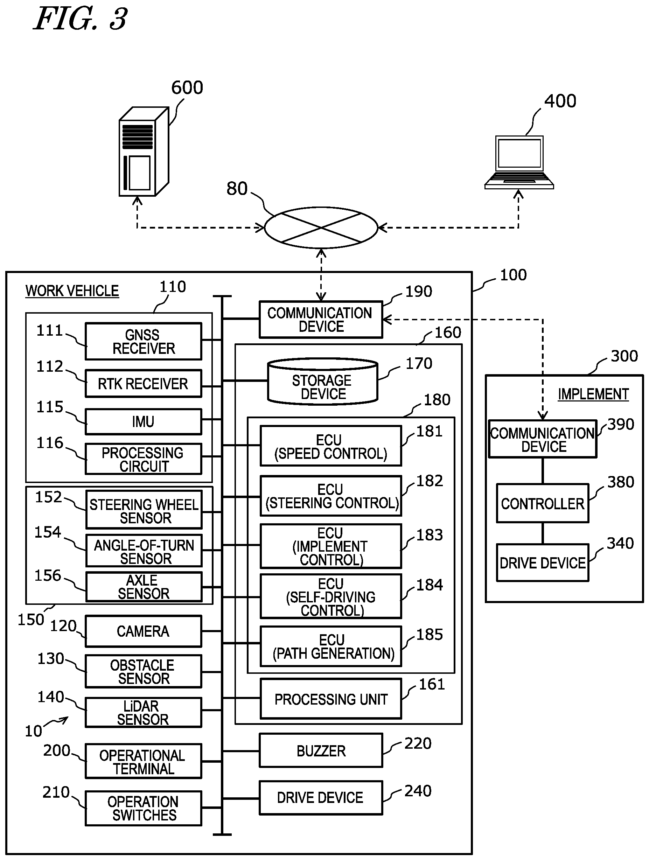

FIG. **3** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the terminal device **400** and the management device **600** via the network **80.**

In addition to the GNSS unit **110,** the cameras **120,** the obstacle sensors **130,** the LiDAR sensor **140** and the operational terminal **200,** the work vehicle **100** in the example of FIG. **3** includes sensors **150** to detect the operating status of the work vehicle **100,** a control system **160,** a communication device **190,** operation switches **210,** a buzzer **220,** and a drive device **240.** These component elements are communicably connected to each other via a bus. The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and an axle sensor **156.** The control system **160** includes a processing unit **161,** a storage device **170** and a controller **180.** The controller **180** includes a plurality of electronic control units (ECU) **181 to 185.** The implement **300** includes a drive device **340,** a controller **380,** and a communication device **390.** Note that FIG. **3** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the identification number, the angle of elevation, the azimuth angle, and a value representing the reception strength of each of the satellites from which the satellite signals are received.

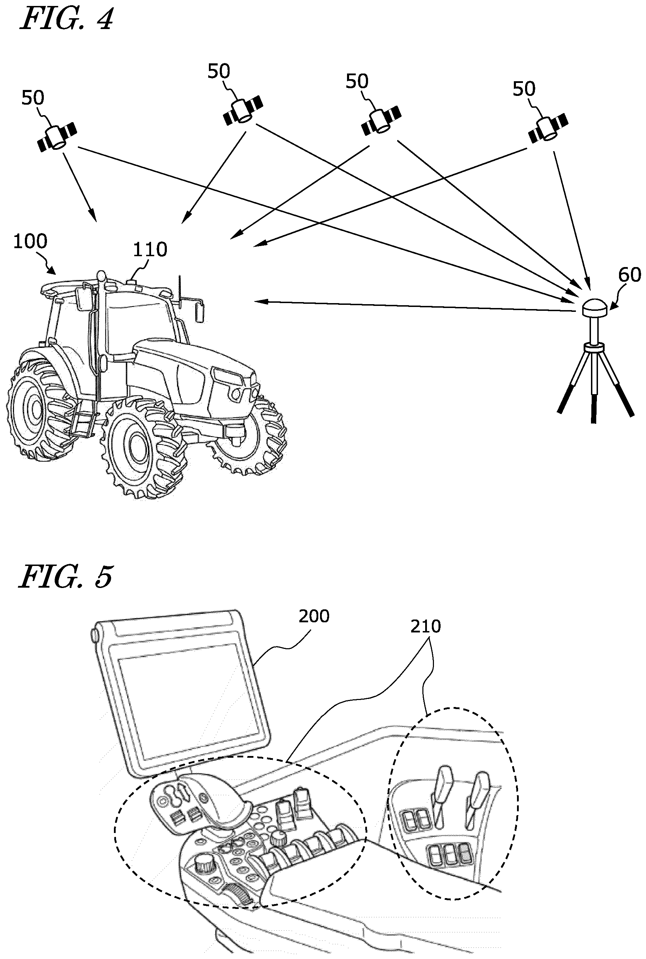

The GNSS unit **110** shown in FIG. **3** performs positioning of the work vehicle **100** by utilizing an RTK (Real Time Kinematic) -GNSS. FIG. **4** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the work vehicle **100** performs tasked travel (e.g., at a position within 10 km of the work vehicle **100).** The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by use of the GNSS receiver **111.** Use of the RTK-GNSS enables positioning with an accuracy on the order of several centimeters of errors, for example. Positional data including latitude, longitude, and altitude information is acquired through the highly accurate positioning by the RTK-GNSS. The GNSS unit **110** calculates the position of the work vehicle **100** as frequently as, for example, one to ten times per second.

Note that the positioning method is not limited to being performed by use of an RTK-GNSS; any arbitrary positioning method (e.g., an interferometric positioning method or a relative positioning method) that provides positional data with the necessary accuracy can be used. For example, positioning may be performed by utilizing a VRS (Virtual Reference Station) or a DGPS (Differential Global Positioning System). In the case where positional data with the necessary accuracy can be obtained without the use of the correction signal transmitted from the reference station **60,** positional data may be generated without using the correction signal. In that case, the GNSS unit **110** does not need to include the RTK receiver **112.**

Even in the case where the RTK-GNSS is used, at a site where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data output from the LiDAR sensor **140** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the environment around the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the environment around the work vehicle **100,** and generate image data (e.g., motion picture data). The cameras **120** are able to capture motion pictures at a frame rate of 3 frames/second (fps: frames per second) or greater, for example. The images generated by the cameras **120** may be used by a remote supervisor to check the environment around the work vehicle **100** with the terminal device **400,** for example. The images generated by the cameras **120** may also be used for the purpose of positioning and/or detection of obstacles. As shown in FIG. **2****,** the plurality of cameras **120** may be provided at different positions on the work vehicle **100,** or a single camera **120** may be provided. A visible camera(s) to generate visible light images and an infrared camera(s) to generate infrared images may be separately provided. Both of a visible camera(s) and an infrared camera(s) may be provided as cameras for generating images for monitoring purposes. The infrared camera(s) may also be used for detection of obstacles at nighttime.

The obstacle sensors **130** detect objects existing around the work vehicle **100.** Each of the obstacle sensors **130** may include a laser scanner or an ultrasonic sonar, for example. When an object exists at a position within a predetermined distance from one of the obstacle sensors **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles around the work vehicle **100.**

The steering wheel sensor **152** measures the angle of rotation of the steering wheel of the work vehicle **100.** The angle-of-turn sensor **154** measures the angle of turn of the front wheels **104F,** which are the steered wheels. Measurement values by the steering wheel sensor **152** and the angle-of-turn sensor **154** are used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.**

The drive device **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound to alert the user of an abnormality. For example, the buzzer **220** may present an alarm sound when an obstacle is detected during self-driving. The buzzer **220** is controlled by the controller **180.**

The processing unit **161** may be a microprocessor or a microcontroller. The processing unit **161** processes sensor data output from sensing devices, such as the cameras **120,** the obstacle sensors **130** and the LiDAR sensor **140.** For example, the processing unit **161** detects objects around the work vehicle **100** based on data output from the cameras **120,** the obstacle sensors **130** and the LiDAR sensor **140.**

The storage device **170** includes one or more storage mediums such as a flash memory or a magnetic disc. The storage device **170** stores various data that is generated by the GNSS unit **110,** the cameras **120,** the obstacle sensors **130,** the LiDAR sensor **140,** the sensors **150,** and the controller **180.** The data that is stored by the storage device **170** may include map data on the environment where the work vehicle **100** travels (environment map) and data on a target path for self-driving. The environment map includes information on a plurality of fields where the work vehicle **100** performs agricultural work and roads around the fields. The environment map and the target path may be generated by a processor in the management device **600.** The controller **180** may have a function of generating or editing an environment map and a target path. The controller **180** can edit the environment map and the target path, acquired from the management device **600,** in accordance with the environment where the work vehicle **100** travels. The storage device **170** also stores data on a work plan received by the communication device **190** from the management device **600.**

The storage device **170** also stores a computer program(s) to cause the processing unit **161** and each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for self-driving control, and the ECU **185** for path generation.

The ECU **181** controls the prime mover **102,** the transmission **103** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communication device **190** to the implement **300.**

Based on data output from the GNSS unit **110,** the cameras **120,** the obstacle sensors **130,** the LiDAR sensor **140,** the sensors **150** and the processing unit **161,** the ECU **184** performs computation and control for achieving self-driving. For example, the ECU **184** specifies the position of the work vehicle **100** based on the data output from at least one of the GNSS unit **110,** the cameras **120** and the LiDAR sensor **140.** Inside the field, the ECU **184** may determine the position of the work vehicle **100** based only on the data output from the GNSS unit **110.** The ECU **184** may estimate or correct the position of the work vehicle **100** based on the data acquired by the cameras **120** and/or the LiDAR sensor **140.** Use of the data acquired by the cameras **120** and/or the LiDAR sensor **140** allows the accuracy of the positioning to be further improved. Outside the field, the ECU **184** estimates the position of the work vehicle **100** by use of the data output from the LiDAR sensor **140** and/or the cameras **120.** For example, the ECU **184** may estimate the position of the work vehicle **100** by matching the data output from the LiDAR sensor **140** and/or the cameras **120** against the environment map. During self-driving, the ECU **184** performs computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103** or the brakes to change the speed of the work vehicle **100.** In response to the command to change the steering angle, the ECU **182** controls the steering device **106** to change the steering angle.

The ECU **185** can determine a destination of the work vehicle **100** based on the work plan stored in the storage device **170,** and determine a target path from a beginning point to a target point of the movement of the work vehicle **100.** The ECU **185** may perform the process of detecting objects around the work vehicle **100** based on the data output from the cameras **120,** the obstacle sensors **130** and the LiDAR sensor **140.**

Through the actions of these ECUs, the controller **180** realizes self-driving. During self-driving, the controller **180** controls the drive device **240** based on the measured or estimated position of the work vehicle **100** and on the target path. As a result, the controller **180** can cause the work vehicle **100** to travel along the target path.

The plurality of ECUs included in the controller **180** can communicate with each other in accordance with a vehicle bus standard such as, for example, a CAN (Controller Area Network). Instead of the CAN, faster communication methods such as Automotive Ethernet (registered trademark) may be used. Although the ECUs **181** to **185** are illustrated as individual blocks in FIG. **3****,** the function of each of the ECU **181** to **185** may be implemented by a plurality of ECUs. Alternatively, an onboard computer that integrates the functions of at least some of the ECUs **181** to **185** may be provided. The controller **180** may include ECUs other than the ECUs **181 to 185,** and any number of ECUs may be provided in accordance with functionality. Each ECU includes a processing circuit including one or more processors. The controller **180** may include the processing unit **161.** The processing unit **161** may be integrated with any of the ECUs included in the controller **180.**

The communication device **190** is a device including a circuit communicating with the implement **300,** the terminal device **400** and the management device **600.** The communication device **190** includes circuitry to perform exchanges of signals complying with an ISOBUS standard such as ISOBUS-TIM, for example, between itself and the communication device **390** of the implement **300.** This allows the implement **300** to perform a desired operation, or allows information to be acquired from the implement **300.** The communication device **190** may further include an antenna and a communication circuit to exchange signals via the network **80** with communication devices of the terminal device **400** and the management device **600.** The network **80** may include a 3G, 4G, 5G, or any other cellular mobile communications network and the Internet, for example. The communication device **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the work vehicle **100** and the operation of the implement **300,** and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, recording or editing an environment map, setting a target path, and switching ON/OFF the implement **300.** At least a portion of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.** Instead of the operational terminal **200,** the user may manipulate a computer on which necessary application software is installed, for example, the terminal device **400,** to control the operation of the work vehicle **100.**

FIG. **5** is a diagram showing an example of the operational terminal **200** and an example of the operation switches **210** both provided in the cabin **105.** In the cabin **105,** the operation switches **210,** including a plurality of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In the case where the work vehicle **100** only performs unmanned driving and lacks human driving functionality, the work vehicle **100** does not need to include the operation switches **210.**

The drive device **340** in the implement **300** shown in FIG. 3 performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communication device **390,** the controller **380** causes the drive device **340** to perform various operations. Moreover, a signal that is in accordance with the state of the implement **300** can be transmitted from the communication device **390** to the work vehicle **100.**

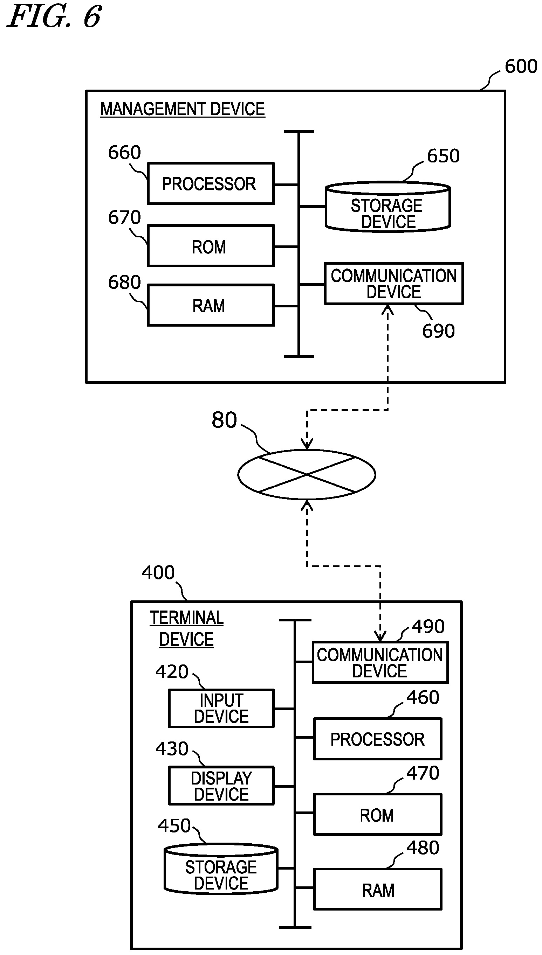

Now, a configuration of the management device **600** and the terminal device **400** will be described with reference to FIG. **6.** FIG. **6** is a block diagram showing an example of schematic hardware configuration of the management device **600** and the terminal device **400.**

The management device **600** includes a storage device **650,** a processor **660,** a ROM (Read Only Memory) **670,** a RAM (Random Access Memory) **680,** and a communication device **690.** These component elements are communicably connected to each other via a bus. The management device **600** may function as a cloud server to manage the schedule of the agricultural work to be performed by the work vehicle **100** in a field and support agriculture by use of the data managed by the management device **600** itself. The user can input information necessary to create a work plan by use of the terminal device **400** and upload the information to the management device **600** via the network **80.** The management device **600** can create a schedule of agricultural work, that is, a work plan based on the information. The management device **600** can further generate or edit an environment map. The environment map may be distributed from a computer external to the management device **600.**

The communication device **690** is a communication module to communicate with the work vehicle **100** and the terminal device **400** via the network **80.** The communication device **690** can perform wired communication in compliance with communication standards such as, for example, IEEE1394 (registered trademark) or Ethernet (registered trademark). The communication device **690** may perform wireless communication in compliance with Bluetooth (registered trademark) or Wi-Fi, or cellular mobile communication based on 3G, 4G, 5G or any other cellular mobile communication standard.

The processor **660** may be, for example, a semiconductor integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit) or an ASSP (Application Specific Standard Product) each including a CPU, or a combination of two or more selected from these circuits. The processor **660** consecutively executes a computer program, describing commands to execute at least one process, stored in the ROM **670** and thus realizes a desired process.

The ROM **670** is, for example, a writable memory (e.g., PROM), a rewritable memory (e.g., flash memory) or a memory which can only be read from but cannot be written to. The ROM **670** stores a program to control operations of the processor **660.** The ROM **670** does not need to be a single storage medium, and may be an assembly of a plurality of storage mediums. A portion of the assembly of the plurality of storage memories may be a detachable memory.

The RAM **680** provides a work area in which the control program stored in the ROM **670** is once developed at the time of boot. The RAM **680** does not need to be a single storage medium, and may be an assembly of a plurality of storage mediums.

The storage device **650** mainly functions as a storage for a database. The storage device **650** may be, for example, a magnetic storage device or a semiconductor storage device. An example of the magnetic storage device is a hard disc drive (HDD). An example of the semiconductor storage device is a solid state drive (SSD). The storage device **650** may be a device independent from the management device **600.** For example, the storage device **650** may be a storage device connected to the management device **600** via the network **80,** for example, a cloud storage.

The terminal device **400** includes an input device **420,** a display device **430,** a storage device **450,** a processor **460,** a ROM **470,** a RAM **480,** and a communication device **490.** These component elements are communicably connected to each other via a bus. The input device **420** is a device to convert an instruction from the user into data and input the data to a computer. The input device **420** may be, for example, a keyboard, a mouse or a touch panel. The display device **430** may be, for example, a liquid crystal display or an organic EL display. The processor **460,** the ROM **470,** the RAM **480,** the storage device **450** and the communication device **490** are substantially the same as the corresponding component elements described above regarding the example of the hardware configuration of the management device **600,** and will not be described in repetition.

### [2. Operation]

Now, an operation of the work vehicle **100,** the terminal device **400** and the management device **600** will be described.

### [2-1. Self-traveling operation]

First, an example operation of self-traveling of the work vehicle **100** will be described. The work vehicle **100** according to the present embodiment can automatically travel both inside and outside a field. Inside the field, the work vehicle **100** drives the implement **300** to perform predetermined agricultural work while traveling along a preset target path. When detecting an obstacle while traveling inside the field, the work vehicle **100** halts traveling and performs operations of presenting an alarm sound from the buzzer **220,** transmitting an alert signal to the terminal device **400** and the like. Inside the field, the positioning of the work vehicle **100** is performed based mainly on data output from the GNSS unit **110.** Meanwhile, outside the field, the work vehicle **100** automatically travels along a target path set for an agricultural road or a general road outside the field. While traveling outside the field, the work vehicle **100** travels with the effective use of data acquired by the cameras **120** and/or the LiDAR sensor **140.** When an obstacle is detected outside the field, the work vehicle **100** avoids the obstacle or halts at the point. Outside the field, the position of the work vehicle **100** is estimated based on data output from the LiDAR sensor **140** and/or the cameras **120** in addition to positioning data output from the GNSS unit **110.**

Hereinafter, an example of the operation performed when the work vehicle **100** performs self-traveling in the field is described.

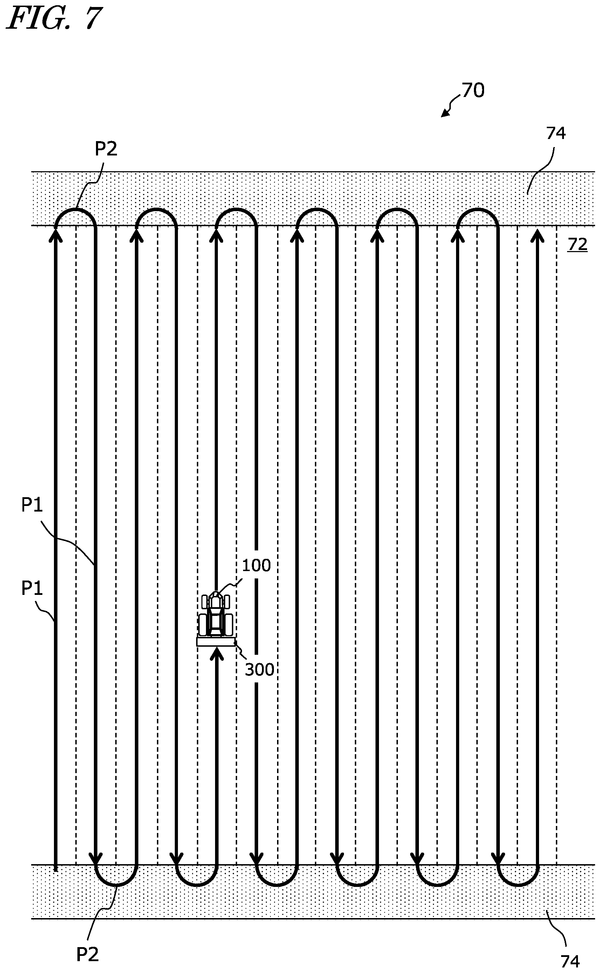

FIG. **7** is a diagram schematically showing an example of the work vehicle **100** automatically traveling along a target path in a field. In this example, the field **70** includes a work area **72,** in which the work vehicle **100** performs work by using the implement **300,** and headlands **74,** which are located near outer edges of the field **70.** The user may previously specify which regions of the field **70** on the map would correspond to the work area **72** and the headlands **74.** The target path in this example includes a plurality of main paths **P1** parallel to each other and a plurality of turning paths **P2** interconnecting the plurality of main paths **P1**. The main paths **P1** are located in the work area **72,** whereas the turning paths **P2** are located in the headlands **74.** Although each of the main paths **P1** in FIG. **7** is illustrated as a linear path, each main path **P1** may also include a curved portion(s). Broken lines in FIG. **7** depict the working breadth of the implement **300.** The working breadth is previously set and recorded in the storage device **170.** The working breadth may be set and recorded by the user manipulating the operational terminal **200** or the terminal device **400.** Alternatively, the working breadth may be automatically recognized and recorded when the implement **300** is connected to the work vehicle **100.** The interval between the plurality of main paths **P1** may be set so as to be matched to the working breadth. The target path may be generated based on the manipulation made by the user, before self-driving is begun. The target path may be generated so as to cover the entire work area **72** in the field **70,** for example. Along the target path shown in FIG. **7****,** the work vehicle **100** automatically travels while repeating a reciprocating motion from a beginning point of work to an ending point of work. Note that the target path shown in FIG. **7** is merely an example, and the target path may be arbitrarily determined.

Now, an example control by the controller **180** during self-driving inside the field will be described.

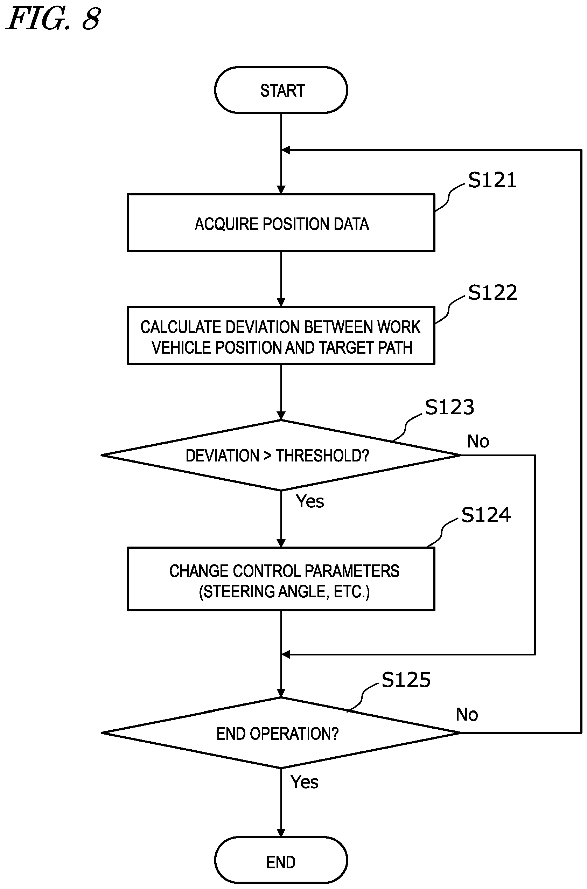

FIG. **8** is a flowchart showing an example operation of steering control to be performed by the controller **180** during self-driving. During travel of the work vehicle **100,** the controller **180** performs automatic steering by performing the operation from steps **S121** to **S125** shown in FIG. **8****.** The speed of the work vehicle **100** will be maintained at a previously-set speed, for example. First, during travel of the work vehicle **100,** the controller **180** acquires data representing the position of the work vehicle **100** that is generated by the GNSS unit **110** (step **S121).** Next, the controller **180** calculates a deviation between the position of the work vehicle **100** and the target path (step **S122).** The deviation represents the distance between the position of the work vehicle **100** and the target path at that moment. The controller **180** determines whether the calculated deviation in position exceeds the previously-set threshold or not (step **S123).** If the deviation exceeds the threshold, the controller **180** changes a control parameter of the steering device included in the drive device **240** so as to reduce the deviation, thus changing the steering angle (step **S124).** If the deviation does not exceed the threshold at step **S123,** the operation of step **S124** is omitted. At the following step **S125,** the controller **180** determines whether a command to end the operation has been received or not. The command to end the operation may be given when the user has instructed that self-driving be suspended through remote operations, or when the work vehicle **100** has arrived at the destination, for example. If the command to end the operation has not been given, the control returns to step **S121** and the controller **180** performs substantially the same operation based on a newly measured position of the work vehicle **100.** The controller **180** repeats the operation from steps **S121 to S125** until a command to end the operation is given. The aforementioned operation is executed by the ECUs **182** and **184** in the controller **180.**

In the example shown in FIG. **8****,** the controller **180** controls the drive device **240** based only on the deviation between the position of the work vehicle **100** as identified by the GNSS unit **110** and the target path. Alternatively, a deviation in terms of directions may further be considered in the control. For example, when a directional deviation exceeds a previously-set threshold, where the directional deviation is an angle difference between the orientation of the work vehicle **100** as identified by the GNSS unit **110** and the direction of the target path, the controller **180** may change the control parameter of the steering device of the drive device **240** (e.g., steering angle) in accordance with the deviation.

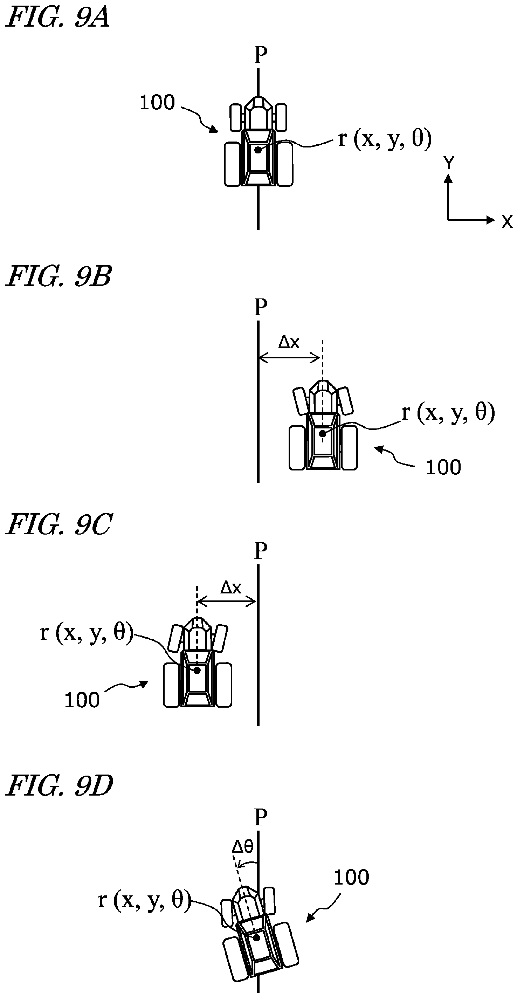

Hereinafter, with reference to FIGS. **9A** to **9D****,** an example of steering control by the controller **180** will be described more specifically.

FIG. **9A** is a diagram showing an example of the work vehicle **100** traveling along a target path **P.** FIG. **9B** is a diagram showing an example of the work vehicle **100** at a position which is shifted rightward from the target path **P.** FIG. **9C** is a diagram showing an example of the work vehicle **100** at a position which is shifted leftward from the target path **P.** FIG. **9D** is a diagram showing an example of the work vehicle **100** oriented in an inclined direction with respect to the target path **P.** In these figures, the pose, i.e., the position and orientation, of the work vehicle **100** as measured by the GNSS unit **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. **9A** to **9D****,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path P may not necessarily be parallel to the Y axis, in general.

As shown in FIG. **9A****,** in the case where the position and orientation of the work vehicle **100** are not deviated from the target path **P,** the controller **180** maintains the steering angle and speed of the work vehicle **100** without changing them.

As shown in FIG. **9B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** At this point, not only the steering angle but also the speed may be changed. The magnitude of the steering angle may be adjusted in accordance with the magnitude of a positional deviation Δx, for example.

As shown in FIG. **9C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **9D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by sensing devices such as the cameras **120,** the obstacle sensors **130** and the LiDAR sensor **140** during travel, the controller **180** halts the work vehicle **100.** At this point, the controller **180** may cause the buzzer **220** to present an alarm sound or may transmit an alert signal to the terminal device **400.** In the case where the obstacle is avoidable, the controller **180** may control the drive device **240** such that the obstacle is avoided.

The work vehicle **100** according to the present embodiment can perform self-traveling outside a field as well as inside the field. Outside the field, the processing unit **161** and/or the controller **180** is able to detect objects around the work vehicle **100** (e.g., another vehicle, a pedestrian, etc.) based on data output from sensing devices such as the cameras **120,** the obstacle sensors **130** and the LiDAR sensor **140.** Using the cameras **120** and the LiDAR sensor **140** enables detection of an object located at a relatively distant position from the work vehicle **100.** The controller **180** performs speed control and steering control such that the work vehicle **100** avoids the detected object, thereby realizing self-traveling on a road outside the field.

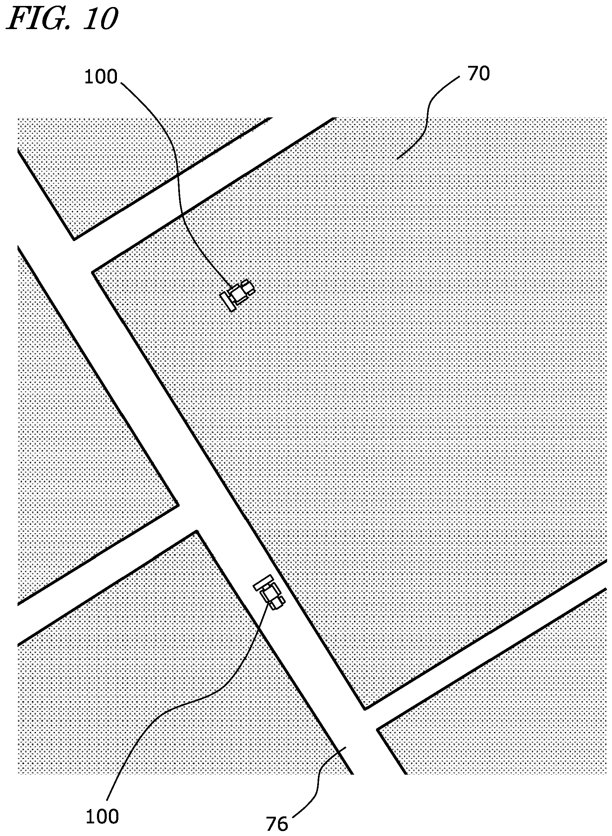

As described above, the work vehicle **100** according to the present embodiment can automatically travel inside the field and outside the field in an unmanned manner. FIG. **10** is a diagram schematically showing an example of state where a plurality of the work vehicles **100** are performing self-traveling inside a field **70** and on a road **76** outside the field **70.** In the storage device **170,** an environment map of a region including a plurality of fields **70** and roads around the fields **70,** and a target path, are recorded. The environment map and the target path may be generated by the management device **600** or the ECU **185.** In the case of traveling on a road, the work vehicle **100** travels along the target path while sensing the surroundings thereof by use of the sensing devices such as the cameras **120,** the obstacle sensors 130 and the LiDAR sensor **140,** with the implement **300** being raised.

### [2-2. Entry operation into passageway extending between road and site]

Next, the entry operation of the work vehicle **100** into a passageway extending between a road and a site is described.

As previously described, sensing devices, such as the cameras **120,** the obstacle sensors **130** and the LiDAR sensors **140,** sense the environment around the work vehicle **100** to output sensor data. The work vehicle **100** of the present embodiment includes a travel control system **10** (FIG. **3****)** configured to detect objects in the search region around the work vehicle **100** based on the sensor data and also control self-driving of the work vehicle **100.** The travel control system **10** includes a control system **160,** cameras **120,** obstacle sensors **130** and LiDAR sensors **140.** The control system **160** is also referred to as "controller". The search region refers to part of a region around the work vehicle **100** sensed by the sensing devices in which a search for objects is to be conducted. The search region may be equal in size to, or may be smaller than, the sensing region sensed by the sensing devices. The search region can also be referred to as Region of Interest (ROI). The agriculture management system **1** may be the travel control system **10** configured to detect objects in the search region around the work vehicle **100** and also control self-driving of the work vehicle **100.**

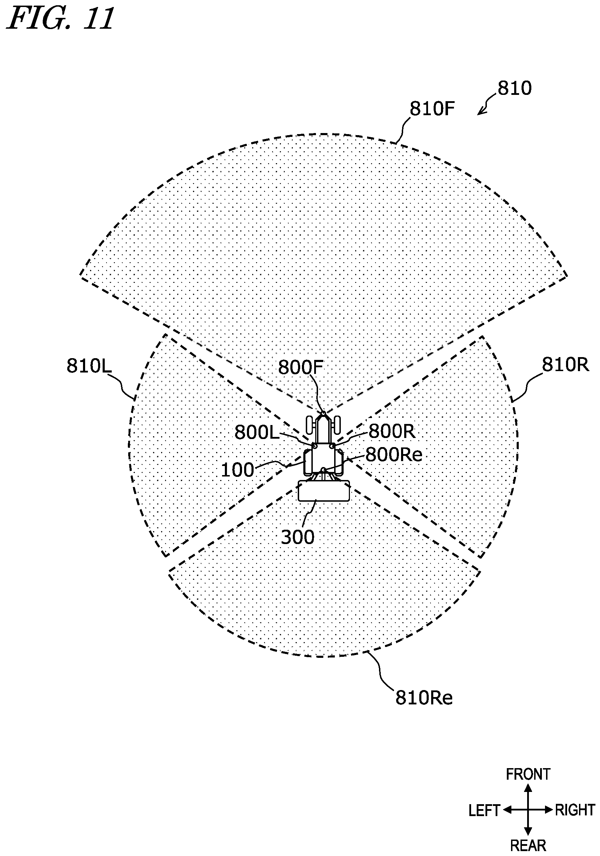

FIG. **11** is a diagram showing an example of the search region **810** of the work vehicle **100.** The search region **810** includes a front search region **810F,** a rear search region **810Re,** a left lateral search region **810L,** and a right lateral search region **810R.** FIG. **11** shows the search regions as viewed in plan from a vertical direction while the work vehicle **100** is on horizontal ground.

The work vehicle **100** includes sensing devices **800.** In this example, as the sensing devices **800,** the work vehicle **100** includes the sensing device **800F, 800Re, 800L, 800R.** The sensing device **800F** is provided in the front-side portion of the work vehicle **100** to mainly sense part of the surrounding environment extending on the front side of the work vehicle **100.** The sensing device **800Re** is provided in the rear-side portion of the work vehicle **100** to mainly sense part of the surrounding environment extending on the rear side of the work vehicle **100.** The sensing device **800L** is provided in the left-side portion of the work vehicle **100** to mainly sense part of the surrounding environment extending on the left side of the work vehicle **100.** The sensing device **800R** is provided in the right-side portion of the work vehicle 100 to mainly sense part of the surrounding environment extending on the right side of the work vehicle **100.** The sensing devices **800Re, 800L, 800R** can be provided in, for example, the cabin **105** of the work vehicle **100** (FIG. **2****).** The sensing device **800Re** may be provided in the implement **300.**

As previously described, the search region **810** includes the front search region **810F,** the rear search region **810Re,** the left lateral search region **810L,** and the right lateral search region **810R.** The front search region **810F** is a region in which detection of objects is performed using sensor data output from the sensing device **800F** provided in the front-side portion of the work vehicle **100.** The rear search region **810Re** is a region in which detection of objects is performed using sensor data output from the sensing device **800Re** provided in the rear-side portion of the work vehicle **100.** The left lateral search region **810L** is a region in which detection of objects is performed using sensor data output from the sensing device **800L** provided in the left-side portion of the work vehicle **100.** The right lateral search region **810R** is a region in which detection of objects is performed using sensor data output from the sensing device **800R** provided in the right-side portion of the work vehicle **100.**

In the present embodiment, in the front-side portion of the work vehicle **100,** a camera **120** and a LiDAR sensor **140** are provided as the sensing device **800F.** In the rear-side portion of the work vehicle **100,** a camera **120** and a LiDAR sensor **140** are provided as the sensing device **800Re.** In the left-side portion of the work vehicle **100,** a camera **120,** an obstacle sensor **130,** and a LiDAR sensor **140** are provided as the sensing device **800L.** In the right-side portion of the work vehicle **100,** a camera **120,** an obstacle sensor **130,** and a LiDAR sensor **140** are provided as the sensing device **800R.** The sensing devices **800F** and **800Re** may include an obstacle sensor **130.**

In the following, a region in which a search for objects is to be conducted using sensor data output from the LiDAR sensor **140** will be exemplified as the search region **810,** although the search region **810** is not limited to such an example. The search for objects in the search region **810** can also be conducted using the sensor data output from the camera **120** and/or the obstacle sensor **130.** For example, the search for objects in the search region **810** can be conducted using sensor data output from the camera **120** and the LiDAR sensor **140.**

The LiDAR sensor **140** is capable of sequentially emitting pulses of a laser beam (hereinafter, abbreviated as "laser pulses") while changing the direction of emission and measuring the distance to a point of reflection of each laser pulse based on the difference between the time of emission of each laser pulse and the time of reception of reflection of the laser pulse. The "point of reflection" can be an object in an environment around the work vehicle **100.**

The LiDAR sensor **140** can measure the distance from the LiDAR sensor **140** to an object by an arbitrary method. Examples of the measurement method of the LiDAR sensor **140** include mechanical rotation, MEMS, and phased array type measurement methods. These measurement methods are different in the method of emitting laser pulses (the method of scanning). For example, the mechanical rotation type LiDAR sensor rotates a cylindrical head, which is for emitting laser pulses and detecting reflection of the laser pulses, to scan the surrounding environment in all directions, i.e., 360 degrees, around the axis of rotation. The MEMS type LiDAR sensor uses a MEMS mirror to oscillate the emission direction of laser pulses and scans the surrounding environment in a predetermined angular range centered on the oscillation axis. The phased array type LiDAR sensor controls the phase of light to oscillate the emission direction of the light and scans the surrounding environment in a predetermined angular range centered on the oscillation axis.

The three-dimensional point cloud data output by the LiDAR sensors **140** includes the information about the position of a plurality of points and the information such as the reception intensity of a photodetector (attribute information). The information about the position of a plurality of points is, for example, the information about the emission direction of laser pulses corresponding to the points and the distance between the LiDAR sensors and the points. For example, the information about the position of a plurality of points is the information about the coordinates of the points in a local coordinate system. The local coordinate system is a coordinate system that moves together with the work vehicle **100** and is also referred to as sensor coordinate system. The coordinates of each point can be calculated from the emission direction of laser pulses corresponding to the points and the distance between the LiDAR sensors and the points.

For example, the search region can be set based on the coordinates of each of the points. By selecting points located inside a desired shape in a local coordinate system as points which are to be used in search for objects, the search region of the desired shape can be set.

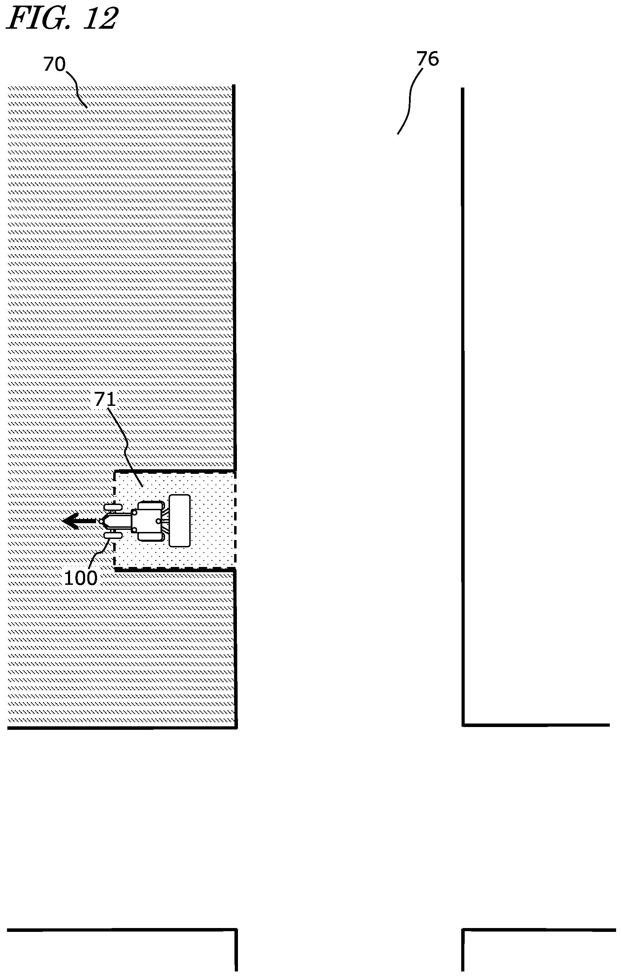

FIG. **12** is a diagram showing a road **76,** a site **70,** and a passageway **71** extending between the road **76** and the site **70.** The site **70** is, for example, a field. As described above with reference to FIG. **10****,** the work vehicle **100** travels inside the field **70** and on the road **76** outside the field **70** in a self-driving mode. In this example, the passageway **71** is a place of entry into/exit from the field **70.** The work vehicle **100** can enter the field **70** from the road **76** via the passageway **71** and exit from the field **70** into the road **76** via the passageway **71.**

When travelling through such a passageway **71,** it is desirable that the condition of the passageway **71** can be checked. For example, it is desirable that the damage to the passageway **71** can be checked. In the present embodiment, when the work vehicle **100** travelling on the road **76** turns left or right to enter the passageway **71,** the both sides of the passageway **71** with respect to the transverse direction are sensed by the sensing devices **800.**

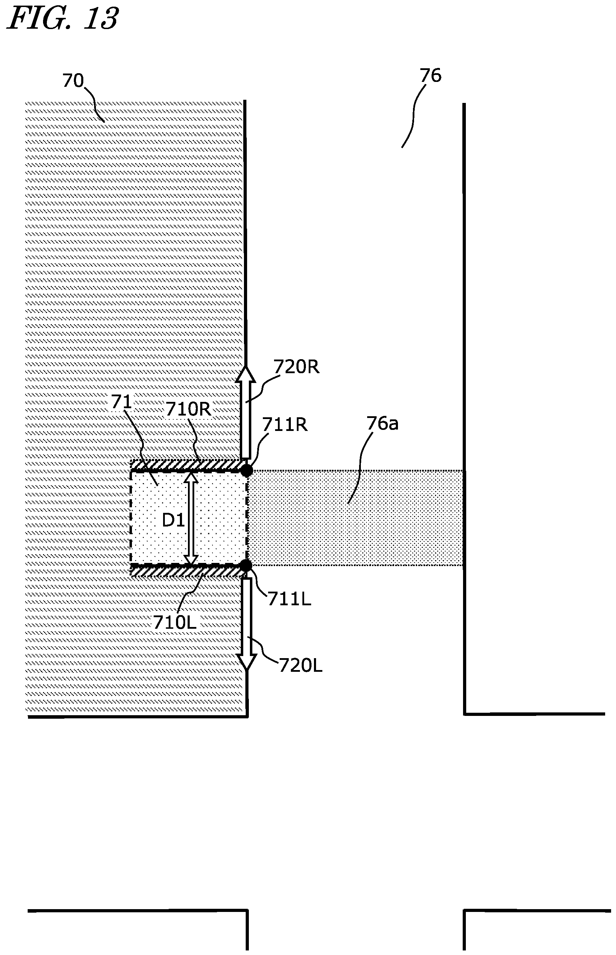

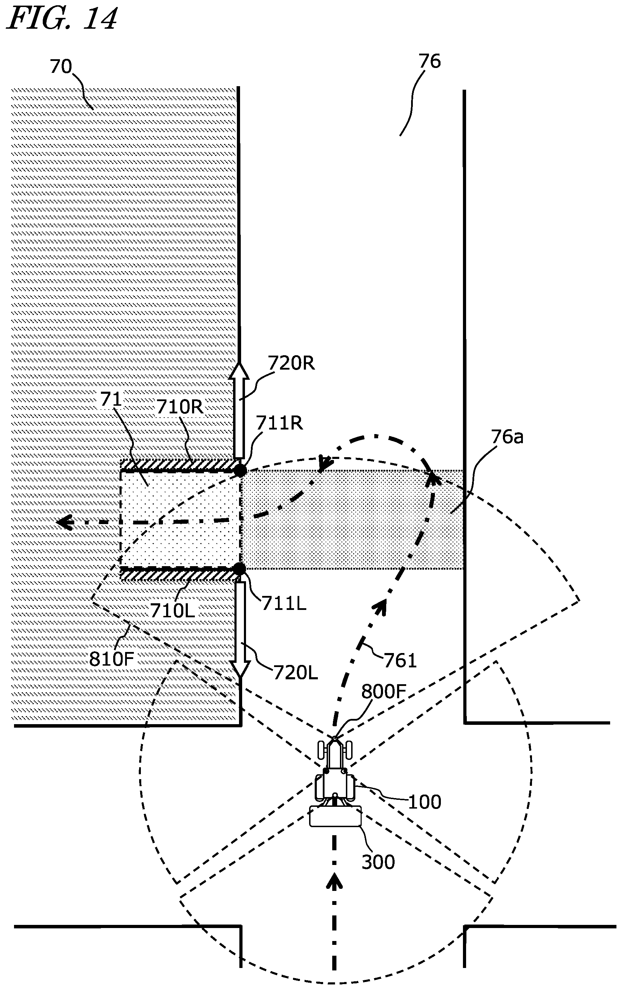

FIG. **13** is a diagram illustrating the passageway **71.** FIG. **14** is a diagram showing a target path **761** for entry from the road **76** into the field **70** via the passageway **71.** In this example, the passageway **71** and the field **70** are located on the left side of the road **76** as viewed from the advancing direction and, therefore, the work vehicle **100** turns left to enter the passageway **71** from the road **76.** When the passageway **71** and the field **70** are located on the right side of the road **76,** the work vehicle **100** turns right to enter the passageway **71** from the road **76.**

As described above, the target path **761** along which the work vehicle **100** is to travel may be generated in advance by the management device **600** or generated in advance by the controller **180.**

In the present embodiment, when the work vehicle **100** enters the passageway **71** from the road **76,** the controller **180** controls the work vehicle **100** so as to travel along the target path **761** such that the both sides of the passageway **71** with respect to the transverse direction **D1** are sensed.

For example, when the work vehicle **100** enters the passageway **71** from the road **76,** the regions **710R, 710L** on the both sides of the passageway **71** with respect to the transverse direction **D1,** which include the boundaries **711R** and **711L** between the road **76** and the passageway **71,** are sensed by the sensing devices **800.** Herein, the left side as viewed from the road **76** toward the passageway **71** is referred to as the left side of the passageway **71,** and the right side as viewed from the road **76** toward the passageway **71** is referred to as the right side of the passageway **71.** The boundary **711R** is the right end portion of the boundary between the road **76** and the passageway **71.** The boundary **711L** is the left end portion of the boundary between the road **76** and the passageway **71.** The region **710R** including the boundary **711R** is a region that includes a right outer lateral portion of the passageway **71** extending along the advancing direction through the passageway **71.** The region **710L** including the boundary **711L** is a region that includes a left outer lateral portion of the passageway **71** extending along the advancing direction through the passageway **71.**

When the work vehicle **100** turns left to enter the passageway **71** from the road **76,** the controller (control system) **160** causes the sensing devices **800** to sense the passageway **71** from a position away from the boundary **711L** (left side boundary) between the road **76** and the passageway **71** in the leftward direction **720L.** As shown in FIG. **14****,** the target path **761** includes a path leading to the passageway **71** from a position away from the passageway **71** in the leftward direction **720L.** During the process where the work vehicle **100** approaches the passageway **71** from a position away from the passageway **71** in the leftward direction **720L,** the region **710L** can be sensed using, for example, the sensing device **800F.**

The controller **160** also causes the sensing devices **800** to sense the passageway **71** from a position away from the boundary **711R** (right side boundary) between the road **76** and the passageway **71** in the rightward direction **720R.** The target path **761** includes a path along which the work vehicle 100 makes a turn under a condition where at least part of the work vehicle **100** has passed through an area **76a** of the road **76** in front of the passageway **71.** The area **76a** is, for example, a region defined by a straight line extending from the boundary **711L** across the road **76** in the transverse direction of the road **76,** a straight line extending from the boundary **711R** across the road **76** in the transverse direction of the road **76,** and the opposite ends of the road **76** between the two straight lines.

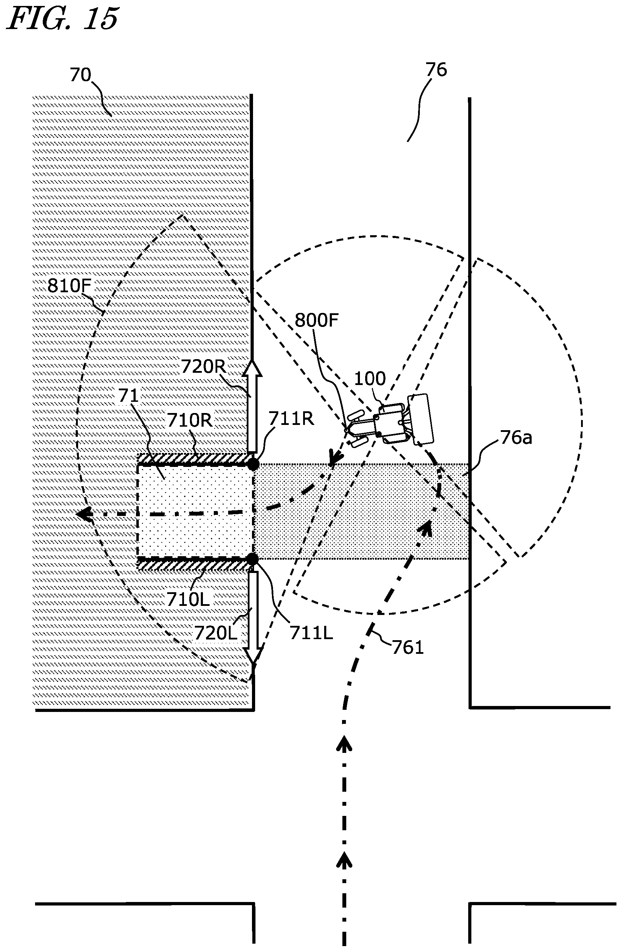

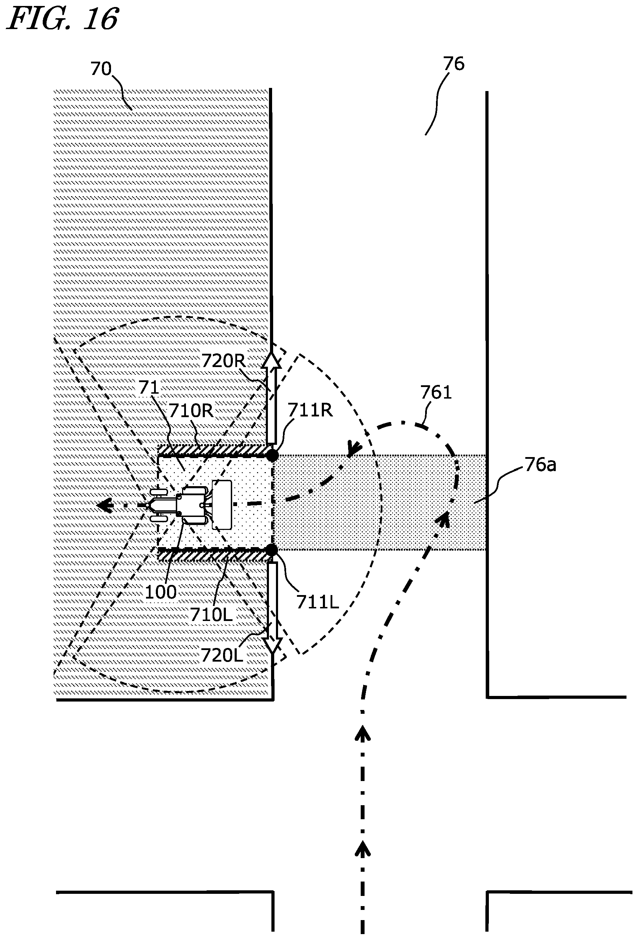

FIG. **15** is a diagram showing the work vehicle **100** that makes a left turn after having passed through the area **76a** in front of the passageway **71** along the target path **761.** Since the work vehicle **100** makes a left turn after having passed through the area **76a** in front of the passageway **71,** the region **710R** can be sensed using, for example, the sensing device **800F.** FIG. **16** is a diagram showing the work vehicle **100** that makes a turn to enter the passageway **71** after having passed through the area **76a** in front of the passageway **71.**

While the work vehicle **100** travels along the above-described target path **761,** it is possible to sense part of the passageway **71** which cannot be sensed in a direction from one of the right and left sides of the passageway **71** and surroundings of that part, so that the passageway **71** and its surrounding environment can be checked in detail. For example, when the work vehicle **100** enters the passageway **71** from a position away from the passageway **71** in the leftward direction **720L,** not only sensing of the passageway **71** from the leftward direction **720L** but also sensing of the passageway **71** from the rightward direction **720R** are performed, whereby the passageway **71** and its surrounding environment can be checked in detail.

In the example above, the sensing devices **800** sense the passageway **71** from a position away from the boundary **711L** in the leftward direction **720L,** and the sensing devices **800** also sense the passageway **71** from a position away from the boundary **711R** in the rightward direction **720R.** The order of the sensing from the position away in the leftward direction **720L** and the sensing from the position away in the rightward direction **720R** is not particularly limited. For example, the order of the sensing from the position away in the leftward direction **720L** and the sensing from the position away in the rightward direction **720R** can vary depending on whether the passageway **71** is on the left or right side of the road **76.**

The processing unit **161** of the controller **160** may determine whether or not to allow the work vehicle **100** to enter the passageway **71** based on the sensor data. If the controller **160** determines not to allow the work vehicle **100** to enter the passageway **71,** the controller **160** controls the work vehicle **100** so as not to enter the passageway **71.** For example, the controller **160** controls the work vehicle **100** so as to stop traveling. For example, the processing unit **161** compares the shape of the passageway **71** sensed at this time with the shape of the passageway **71** sensed in the past, and if the processing unit **161** determines that the change in shape is equal to or greater than a predetermined amount, the processing unit **161** may determine not to allow the work vehicle **100** to enter the passageway **71.**

The controller **160** may transmit at least part of the sensor data to an external device via the communication device **190.** The external device is, for example, the terminal device **400** and/or the management device **600.** The processor of the external device determines whether or not to allow the work vehicle **100** to enter the passageway **71** based on the sensor data. For example, the processor compares the shape of the passageway **71** sensed at this time with the shape of the passageway **71** sensed in the past, and if the processor determines that the change in shape is equal to or greater than a predetermined amount, the processor may determine not to allow the work vehicle **100** to enter the passageway **71.** A person employed for monitoring the work using the external device may determine whether or not to allow the work vehicle **100** to enter the passageway **71** based on the sensor data. If the person employed for monitoring the work determines not to allow the work vehicle **100** to enter the passageway **71,** the person inputs to the external device a command not to allow the work vehicle **100** to enter the passageway **71.** The external device transmits to the work vehicle **100** information representing that the work vehicle **100** is not allowed to enter the passageway **71.**

If the controller **160** receives from the external device the information representing that the work vehicle **100** is not allowed to enter the passageway **71,** the controller **160** controls the work vehicle **100** so as not to enter the passageway **71.**

In addition, when the work vehicle **100** makes a turn to enter the passageway **71,** the work vehicle **100** may provide notification around the work vehicle **100** that the work vehicle **100** is going to make such a turn. For example, the work vehicle **100** may include a notification device capable of emitting light and/or sound. The work vehicle **100** may use the notification device to provide notification around the work vehicle **100** that the work vehicle **100** is going to make a turn. For example, the buzzer **220** may be used as the notification device. When the work vehicle **100** makes a turn, the buzzer **220** may emit an alarm sound.

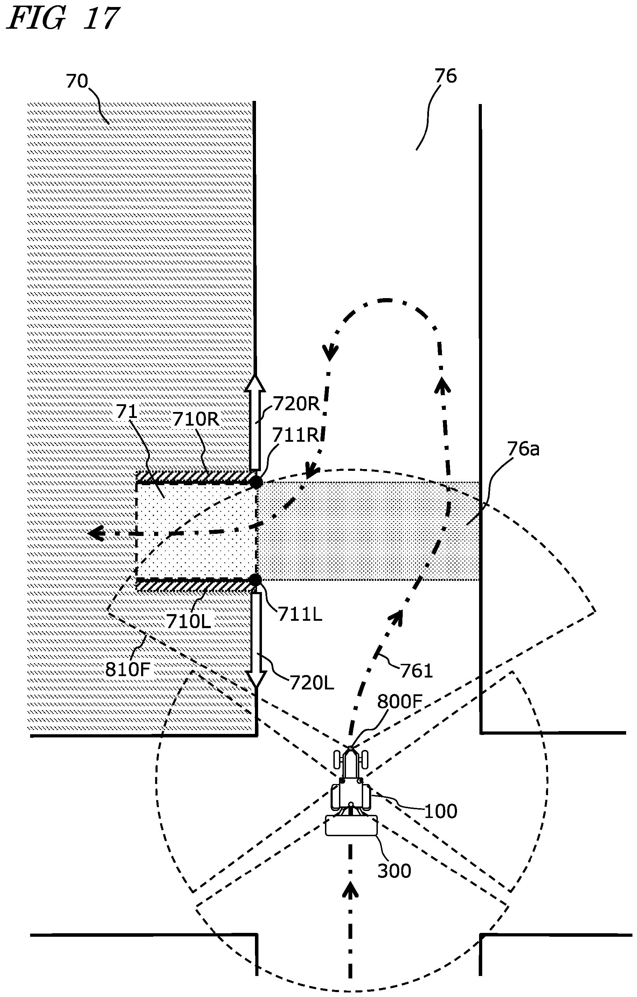

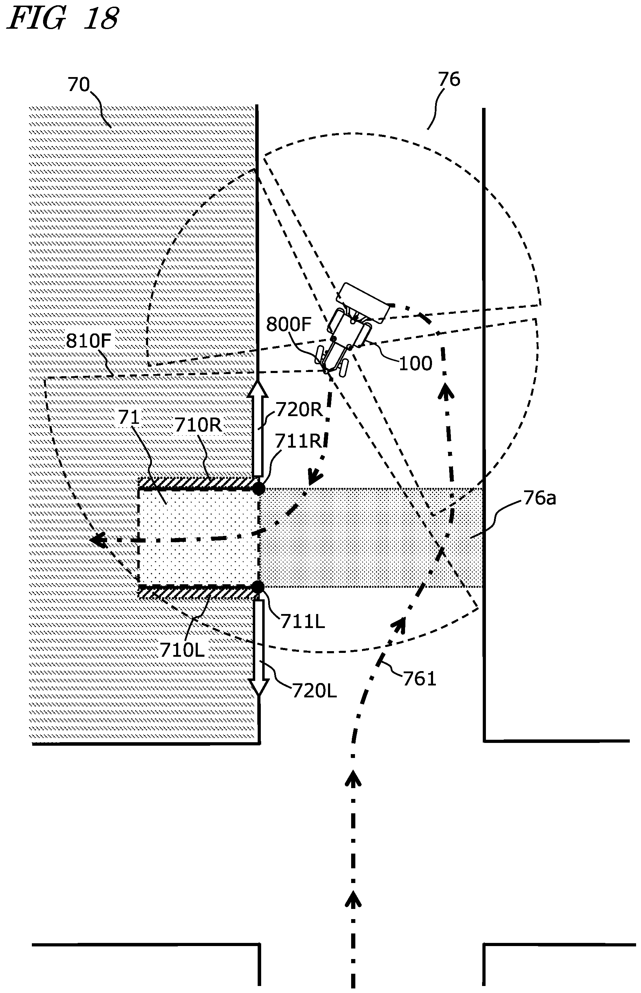

FIG. **17** and FIG. **18** are diagrams showing another example of the target path **761.** The target path **761** shown in FIG. **17** and FIG. **18** includes a path along which the work vehicle **100** makes a U turn after having passed through the area **76a** of the road **76** in front of the passageway **71.**

As shown in FIG. **17****,** the target path **761** includes a path leading to the passageway **71** from a position away from the passageway **71** in the leftward direction **720L.** During the process where the work vehicle **100** approaches the passageway **71** from a position away from the passageway **71** in the leftward direction **720L,** the region **710L** can be sensed using, for example, the sensing device **800F.**

FIG. **18** illustrates the work vehicle **100** that makes a U-turn after having passed through the area **76a** in front of the passageway **71** along the target path **761.** When the work vehicle **100** makes a U-turn after having passed through the area **76a** in front of the passageway **71,** the region **710R** can be sensed using, for example, the sensing device **800F.**

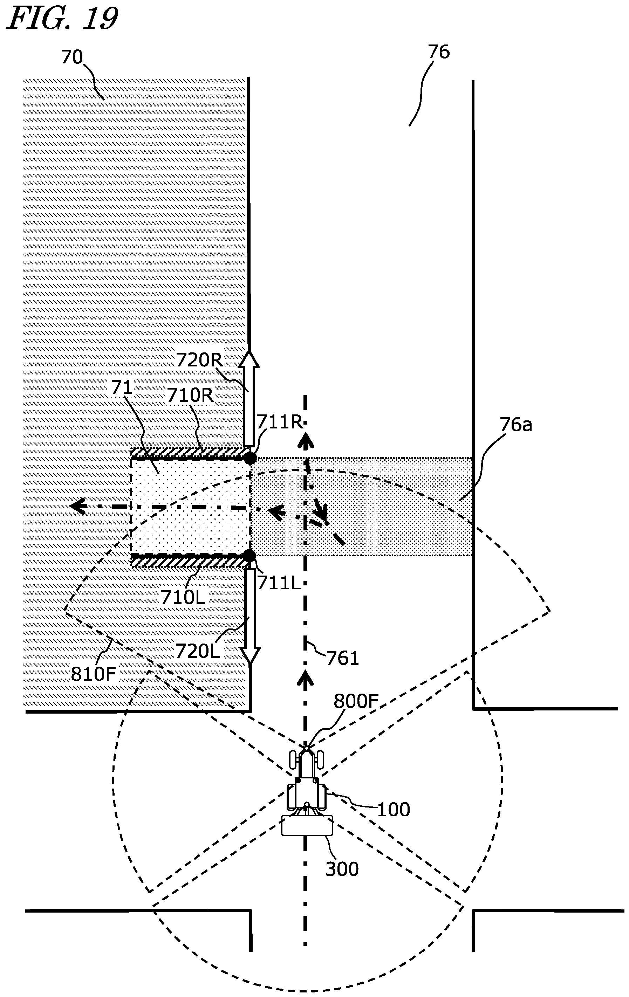

FIG. **19****,** FIG. **20** and FIG. **21** are diagrams showing still another example of the target path **761.** The target path **761** shown in FIG. **19****,** FIG. **20** and FIG. **21** includes a path along which the work vehicle **100** reverses after at least part of the work vehicle **100** traveling forward has passed through the area **76a** of the road **76** in front of the passageway **71.**

As shown in FIG. **19****,** the target path **761** includes a path leading to the passageway **71** from a position away from the passageway **71** in the leftward direction **720L.** During the process where the work vehicle **100** approaches the passageway **71** from a position away from the passageway **71** in the leftward direction **720L,** the region **710L** can be sensed using, for example, the sensing device **800F.**

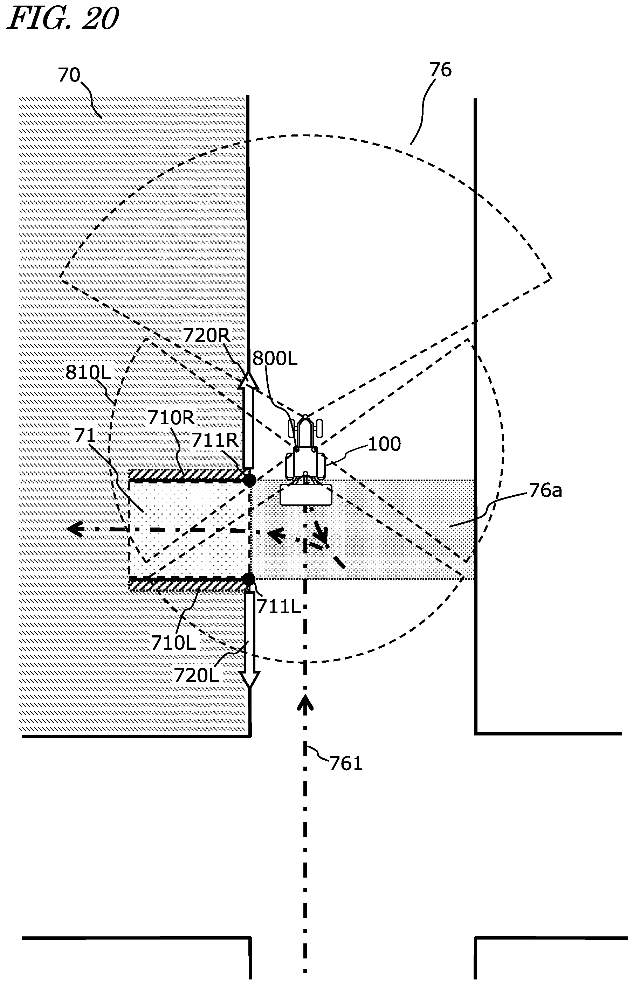

As shown in FIG. **20****,** at least part of the work vehicle **100** passes through the area **76a** in front of the passageway **71.** During the process where at least part of the work vehicle **100** passes through the area in front of the passageway **71,** the region **710R** can be sensed using, for example, the sensing device **800L.**

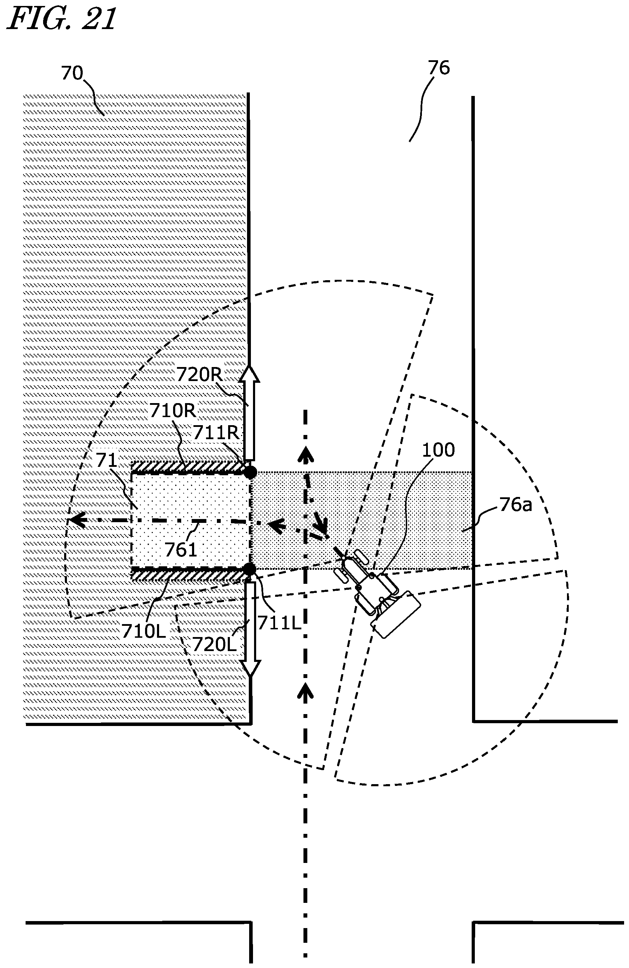

As shown in FIG. **21****,** the work vehicle **100** reverses after at least part of the work vehicle **100** has passed through the area in front of the passageway **71.** In the example shown in FIG. **21****,** the work vehicle **100** makes a right turn while reversing, although the work vehicle **100** may reverse such that it travels backward in a straight line. Even if at least part of the work vehicle **100** has passed through the area in front of the passageway **71,** the work vehicle **100** can reverse afterward so that the work vehicle **100** can easily enter the passageway **71.**

Next, a target path **761** is described along which the work vehicle **100** exits from the field **70** into the road **76** via the passageway **71.**

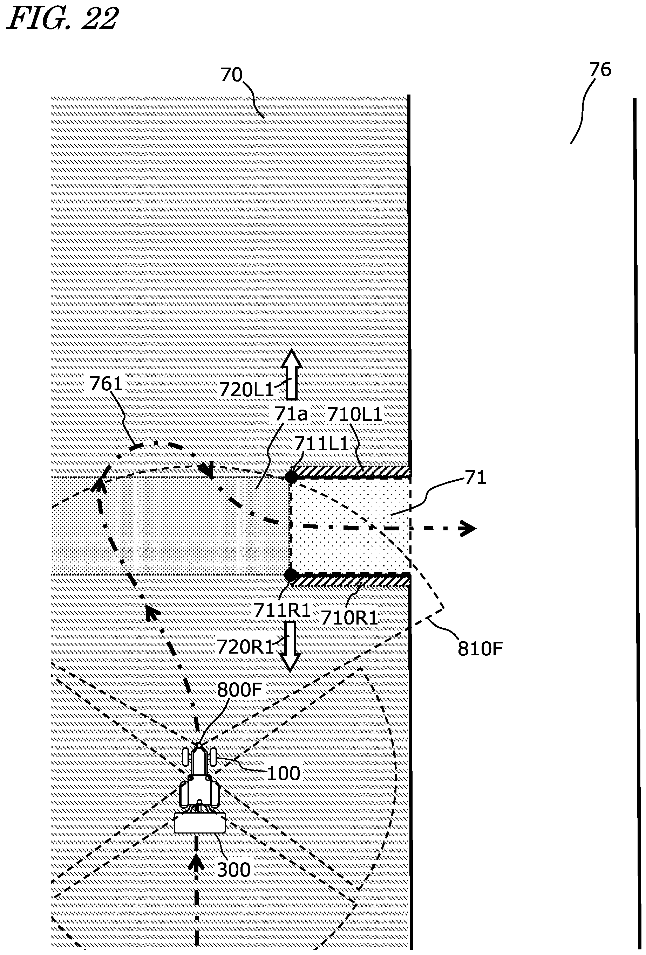

FIG. **22** is a diagram showing the target path **761** along which the work vehicle **100** exits from the field **70** into the road **76** via the passageway **71.** In this example, the passageway **71** is located on the right side of the field **70** as viewed from the advancing direction and, therefore, the work vehicle **100** turns right to enter the passageway **71** from the field **70.** When the passageway **71** is located on the left side of the field **70,** the work vehicle **100** turns left to enter the passageway **71** from the field **70.** When the work vehicle **100** enters the passageway **71** from the field **70,** the controller **180** controls the work vehicle **100** so as to travel along the target path **761** such that the both sides of the passageway **71** with respect to the transverse direction **D1** are sensed (FIG. **13****)** .

For example, when the work vehicle **100** enters the passageway **71** from the field **70,** the regions **710R1, 710L1** on the both sides of the passageway **71** with respect to the transverse direction **D1,** which include the boundaries **711R1, 711L1** between the field **70** and the passageway **71,** are sensed by the sensing devices **800.** Herein, the left side as viewed from the field **70** toward the passageway **71** is referred to as the left side of the passageway **71,** and the right side as viewed from the field **70** toward the passageway **71** is referred to as the right side of the passageway **71.** The boundary **711R1** is the right end portion of the boundary between the field **70** and the passageway **71.** The boundary **711L1** is the left end portion of the boundary between the field **70** and the passageway **71.** The region **710R1** including the boundary **711R1** is a region that includes a right outer lateral portion of the passageway **71** extending along the advancing direction through the passageway **71.** The region **710L1** including the boundary **711L1** is a region that includes a left outer lateral portion of the passageway **71** extending along the advancing direction through the passageway **71.**

When the work vehicle **100** turns right to enter the passageway **71** from the field **70,** the controller **160** causes the sensing devices **800** to sense the passageway **71** from a position away from the boundary **711R1** (right side boundary) between the field **70** and the passageway **71** in the rightward direction **720R1.** As shown in FIG. **22****,** the target path **761** includes a path leading to the passageway **71** from a position away from the passageway **71** in the rightward direction **720R1.** During the process where the work vehicle **100** approaches the passageway **71** from a position away from the passageway **71** in the rightward direction **720R1,** the region **710R1** can be sensed using, for example, the sensing device **800F.**

The controller **160** also causes the sensing devices **800** to sense the passageway **71** from a position away from the boundary **711L1** (left side boundary) between the field **70** and the passageway **71** in the leftward direction **720L1.** The target path **761** includes a path along which the work vehicle **100** makes a turn under a condition where at least part of the work vehicle **100** has passed through an area **71a** of the field **70** in front of the passageway **71.** The area **71a** is, for example, a region defined by a straight line extending from the boundary **711L1** across the field **70** in parallel with the advancing direction through the passageway **71,** a straight line extending from the boundary **711R1** across the field **70** in parallel with the advancing direction through the passageway **71,** and the opposite ends of the field **70** between the two straight lines.

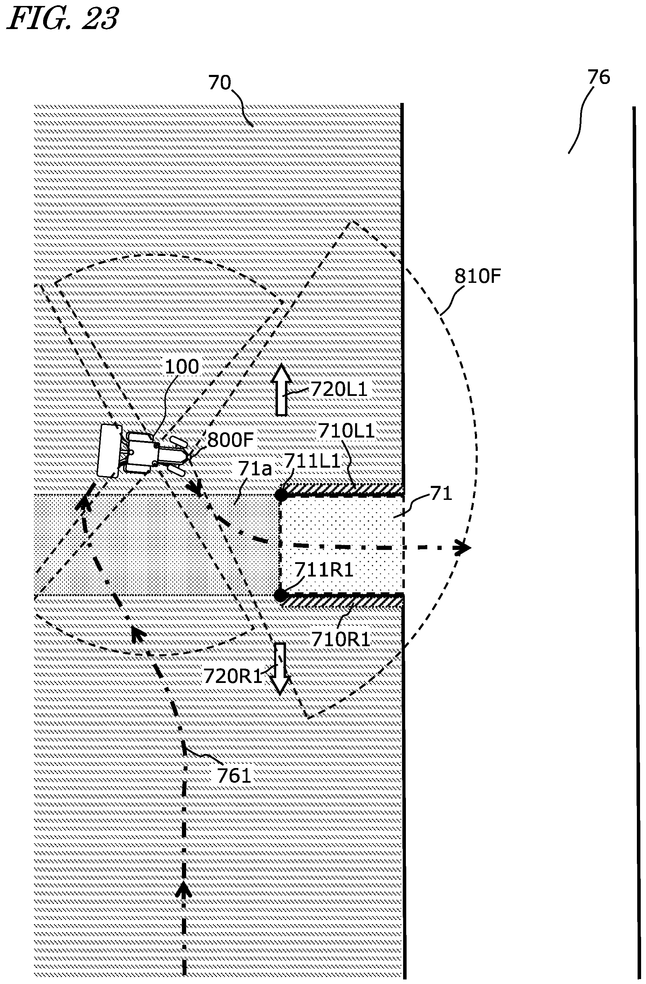

FIG. **23** is a diagram showing the work vehicle **100** that makes a right turn after having passed through the area **71a** in front of the passageway **71** along the target path **761.** Since the work vehicle **100** makes a right turn after having passed through the area **71a** in front of the passageway **71,** the region **710L1** can be sensed using, for example, the sensing device **800F.**

As described above, the present disclosure includes travel control systems, travel control methods, and computer programs, which will be described below.

### [Item 1]

A travel control system **10** for controlling self-driving of a work vehicle **100,** comprising:
a sensor **800** provided in the work vehicle **100,** the sensor **800** being capable of sensing an environment around the work vehicle **100** to output sensor data; and
a controller **160** capable of controlling travel of the work vehicle **100,**
wherein when the work vehicle **100** turns left or right to enter a passageway **71,** the controller **160** controls the work vehicle **100** so as to travel along a target path **761** such that both sides of the passageway **71** with respect to a transverse direction **D1** are sensed.

Part of the passageway **71** which cannot be sensed in a direction from one of the right and left sides of the passageway **71** and surroundings of that part are sensed, whereby the passageway **71** and its surrounding environment can be checked in detail.

### [Item 2]

The travel control system **10** of Item 1, wherein
the passageway **71** is a passageway **71** extending between a road **76** and a site,
when the work vehicle **100** enters the passageway **71** from the road **76,** the controller **160** controls the work vehicle **100** so as to travel along a target path **761** such that a region **710R, 710L** on the both sides of the passageway **71** with respect to the transverse direction **D1,** which includes a boundary **711R, 711L** between the road **76** and the passageway **71,** is sensed.

### [Item 3]

The travel control system **10** of Item 1 or 2, wherein
the passageway **71** is a passageway **71** extending between a road **76** and a site,
when the work vehicle **100** enters the passageway **71** from the site, the controller **160** controls the work vehicle **100** so as to travel along a target path **761** such that a region **710R1, 710L1** on the both sides of the passageway **71** with respect to the transverse direction **D1,** which includes a boundary **711R1, 711L1** between the site and the passageway **71,** is sensed.

### [Item 4]

The travel control system **10** of any of Items 1 to 3, wherein
where the passageway **71** is located on a left or right side of a road **76** on which the work vehicle **100** is traveling, a left side as viewed from the road **76** toward the passageway **71** is referred to as a left side of the passageway **71,** and a right side as viewed from the road **76** toward the passageway **71** is referred to as a right side of the passageway **71,**
when the work vehicle **100** enters the passageway **71** from the road **76,** the controller **160** controls the work vehicle **100** so as to travel along the target path **761** such that the sensor **800** senses the passageway **71** from a position away from a left side boundary **711L** between the road **76** and the passageway **71** in a leftward direction **720L** and that the sensor **800** senses the passageway **71** from a position away from a right side boundary **711R** between the road **76** and the passageway **71** in a rightward direction **720R.**

### [Item 5]

The travel control system **10** of Item 4, wherein the target path **761** includes a target path **761** along which the work vehicle **100** makes a turn under a condition where at least part of the work vehicle **100** has passed through an area **76a** of the road **76** in front of the passageway **71.**

### [Item 6]

The travel control system **10** of Item 4, wherein the target path **761** includes a target path **761** along which the work vehicle **100** makes a U-turn after the work vehicle **100** has passed through an area **76a** of the road **76** in front of the passageway **71.**

### [Item 7]

The travel control system **10** of Item 4, wherein the target path **761** includes a target path **761** along which the work vehicle **100** reverses after at least part of the work vehicle **100** has passed through an area **76a** of the road **76** in front of the passageway **71.**

### [Item 8]

The travel control system **10** of any of Items 1 to 7, wherein
the controller **160** determines whether or not to allow the work vehicle **100** to enter the passageway **71** based on the sensor data, and
if the controller **160** determines not to allow the work vehicle **100** to enter the passageway **71,** the controller **160** controls the work vehicle **100** so as not to enter the passageway **71.**

### [Item 9]

The travel control system **10** of any of Items 1 to 8, wherein
the controller **160** transmits at least part of the sensor data to an external device, and
if the controller **160** receives from the external device information representing that the work vehicle **100** is not allowed to enter the passageway **71,** the controller **160** controls the work vehicle **100** so as not to enter the passageway **71.**

### [Item 10]

The travel control system **10** of any of Items 1 to 9, further comprising a notification device **220** capable of providing notification around the work vehicle **100** that the work vehicle **100** is going to make a turn to enter the passageway **71.**

### [Item 11]

The travel control system **10** of Item 2 or 3, wherein the site is a field **70.**

### [Item 12]

The travel control system **10** of Item 11, wherein the passageway **71** includes a place of entry into/exit from the field **70.**

### [Item 13]

A travel control method for controlling self-driving of a work vehicle **100,** the method comprising:
controlling travel of the work vehicle **100** based on sensor data output from a sensor **800** sensing an environment around the work vehicle **100;** and
when the work vehicle **100** turns left or right to enter a passageway **71,** controlling the work vehicle **100** so as to travel along a target path **761** such that both sides of the passageway **71** with respect to a transverse direction **D1** are sensed.

Part of the passageway **71** which cannot be sensed in a direction from one of the right and left sides of the passageway **71** and its surroundings are sensed, whereby the passageway **71** and its surrounding environment can be checked in detail.

### [Item 14]

A computer program for instructing a computer to control self-driving of a work vehicle **100,** the computer program instructing the computer to execute the followings:
controlling travel of the work vehicle **100** based on sensor data output from a sensor **800** sensing an environment around the work vehicle **100;** and
when the work vehicle **100** turns left or right to enter a passageway **71,** controlling the work vehicle **100** so as to travel along a target path **761** such that both sides of the passageway **71** with respect to a transverse direction **D1** are sensed.

Part of the passageway **71** which cannot be sensed in a direction from one of the right and left sides of the passageway **71** and its surroundings are sensed, whereby the passageway **71** and its surrounding environment can be checked in detail.

### INDUSTRIAL APPLICABILITY

The techniques according to the present disclosure are particularly useful in the fields of agricultural machines, such as tractors, harvesters, rice transplanters, vehicles for crop management, vegetable transplanters, mowers, seeders, spreaders, or agricultural robots, for example.

### REFERENCE SIGNS LIST

1: agriculture management system, **10:** travel control system, **50:** GNSS satellite, **60:** reference station, **70:** field, **71:** passageway, **76:** road, **76a:** area in front of passageway, **80:** network, **100:** work vehicle, **101:** vehicle body, **102:** prime mover (engine), **103:** transmission, **104:** wheels, **105:** cabin, **106:** steering device, **107:** driver's seat, **108:** linkage device, **110:** positioning device, **111:** GNSS receiver, **112:** RTK receiver, **115:** inertial measurement unit (IMU), **116:** processing circuit, **120:** camera, **130:** obstacle sensor, **140:** LiDAR sensor, **150:** sensors, **152:** steering wheel sensor, **154:** angle-of-turn sensor, **156:** rotation sensor, **160:** control system (controller), **161:** processing unit, **170:** storage device, **180:** controller, **181-185:** ECU, **190:** communication device, **200:** operational terminal, **210:** operation switches, **220:** buzzer, **240:** drive device, **300:** implement, **340:** drive device, **380:** controller, **390:** communication device, **400:** terminal unit, **420:** input device, **430:** display device, **450:** storage device, **460:** processor, **470:** ROM, **480:** RAM, **490:** communication device, **600:** management device (server), **660:** processor, **650:** storage device, **670:** ROM, **680:** RAM, **690:** communication device, **710L:** left outer lateral region, **710R:** right outer lateral region, **711L:** left side boundary, **711R:** right side boundary, **720L:** leftward direction, **720R:** rightward direction, **761:** target path (route of travel), **810:** search region, **D1:** transverse direction

## Claims

1. A travel control system for controlling self-driving of an agricultural machine, comprising:
a sensor provided in the agricultural machine, the sensor being capable of sensing an environment around the agricultural machine to output sensor data; and
a controller capable of controlling travel of the agricultural machine,
wherein when the agricultural machine turns left or right to enter a passageway, the controller controls the agricultural machine so as to travel along a target path such that both sides of the passageway with respect to a transverse direction are sensed.

2. The travel control system of claim 1, wherein
the passageway is a passageway extending between a road and a site,
when the agricultural machine enters the passageway from the road, the controller controls the agricultural machine so as to travel along a target path such that a region on the both sides of the passageway with respect to the transverse direction, which includes a boundary between the road and the passageway, is sensed.

3. The travel control system of claim 1 or 2, wherein
the passageway is a passageway extending between a road and a site,
when the agricultural machine enters the passageway from the site, the controller controls the agricultural machine so as to travel along a target path such that a region on the both sides of the passageway with respect to the transverse direction, which includes a boundary between the site and the passageway, is sensed.

4. The travel control system of claim 1 or 2, wherein
where the passageway is located on a left or right side of a road on which the agricultural machine is traveling, a left side as viewed from the road toward the passageway is referred to as a left side of the passageway, and a right side as viewed from the road toward the passageway is referred to as a right side of the passageway,
when the agricultural machine enters the passageway from the road, the controller controls the agricultural machine so as to travel along the target path such that the sensor senses the passageway from a position away from a left side boundary between the road and the passageway in a leftward direction and that the sensor senses the passageway from a position away from a right side boundary between the road and the passageway in a rightward direction.

5. The travel control system of claim 4, wherein the target path includes a target path along which the agricultural machine makes a turn under a condition where at least part of the agricultural machine has passed through an area of the road in front of the passageway.

6. The travel control system of claim 4, wherein the target path includes a target path along which the agricultural machine makes a U-turn after the agricultural machine has passed through an area of the road in front of the passageway.

7. The travel control system of claim 4, wherein the target path includes a target path along which the agricultural machine reverses after at least part of the agricultural machine has passed through an area of the road in front of the passageway.

8. The travel control system of claim 1 or 2, wherein
the controller determines whether or not to allow the agricultural machine to enter the passageway based on the sensor data, and
if the controller determines not to allow the agricultural machine to enter the passageway, the controller controls the agricultural machine so as not to enter the passageway.

9. The travel control system of claim 1 or 2, wherein
the controller transmits at least part of the sensor data to an external device, and
if the controller receives from the external device information representing that the agricultural machine is not allowed to enter the passageway, the controller controls the agricultural machine so as not to enter the passageway.

10. The travel control system of claim 1 or 2, further comprising a notification device capable of providing notification around the agricultural machine that the agricultural machine is going to make a turn to enter the passageway.

11. The travel control system of claim 2, wherein the site is a field.

12. The travel control system of claim 11, wherein the passageway includes a place of entry into/exit from the field.

13. A travel control method for controlling self-driving of an agricultural machine, the method comprising:
controlling travel of the agricultural machine based on sensor data output from a sensor sensing an environment around the agricultural machine; and
when the agricultural machine turns left or right to enter a passageway, controlling the agricultural machine so as to travel along a target path such that both sides of the passageway with respect to a transverse direction are sensed.

14. A computer program for instructing a computer to control self-driving of an agricultural machine, the computer program instructing the computer to execute the followings:
controlling travel of the agricultural machine based on sensor data output from a sensor sensing an environment around the agricultural machine; and
when the agricultural machine turns left or right to enter a passageway, controlling the agricultural machine so as to travel along a target path such that both sides of the passageway with respect to a transverse direction are sensed.
